# FASCICULE DE BREVET EUROPEEN

(11) **EP 3 697 728 B1**
(45) Date de publication et mention de la délivrance du brevet: **10.11.2021**
(21) Numéro de dépôt: 18785664.6
(22) Date de dépôt: 18.10.2018
(51) Int. Cl.: C01B 3/06, B01J 19/00, B01J 19/18, H01M 8/0606, H01M 8/065, H01M 8/04082

(54) **APPAREIL POUR GÉNÉRER UN GAZ**
VORRICHTUNG ZUR GASERZEUGUNG
APPARATUS FOR GENERATING A GAS

(30) Priorité: 18.10.2017 FR 1759786
(43) Date de publication de la demande: 26.08.2020
(73) Titulaire: Commissariat à l'Energie Atomique et aux Energies Alternatives, 75015 Paris (FR)
(72) Inventeur: BOUVIER, Michaël, 38760 Varces Allières et Risset (FR); CAPRON, Philippe, 38730 Virieu sur Bourbre (FR); DELMAS, Jérôme, 33700 Merignac (FR); MATHIEU, Vincent, 38500 Saint-Cassien (FR); ROUGEAUX, Isabelle, 36690 Chabons (FR)
(74) Mandataire: Nony
(86) Numéro de dépôt international: PCT/EP2018/078513
(87) Numéro de publication internationale: WO 2019/077023

(56) Documents cités:
- WO-A1-2010/051557
- US-A1- 2004 067 195
- US-A1- 2006 225 350
- US-A1- 2008 014 479

## Description

La présente invention concerne au principal un appareil pour générer un gaz, et notamment du dihydrogène, par mise en contact d'un liquide avec un catalyseur.

Une méthode bien connue pour générer du dihydrogène consiste à mettre une solution aqueuse d'hydrure, par exemple une solution de borohydrure de sodium, au contact d'un catalyseur de la réaction d'hydrolyse de l'hydrure, formé par exemple de cobalt, de platine ou de ruthénium. Au contact du catalyseur, une réaction d'hydrolyse de la solution aqueuse se produit, générant du dihydrogène.

A titre illustratif, WO 2012/003112 A1 et WO 2010/051557 A1 décrivent des appareils pour mettre en œuvre une telle hydrolyse catalysée d'hydrure. Les appareils de génération de gaz décrits dans ces documents comportent une enceinte contenant, en fonctionnement, une solution aqueuse d'hydrure, et un système catalytique définissant une chambre de catalyse contenant un catalyseur de l'hydrolyse de la solution aqueuse d'hydrure. Le système catalytique comporte un corps et un couvercle amovible. En position fermée du système catalytique, le couvercle et le corps isolent ensemble le catalyseur de la solution aqueuse d'hydrure. Il n'y a alors pas de génération de dihydrogène. En position ouverte du système catalytique, le couvercle est disposé à distance du corps. La solution aqueuse d'hydrure entre alors en contact avec le catalyseur, initiant ainsi la génération de dihydrogène. Le dihydrogène ainsi généré est évacué hors de l'enceinte au travers d'une ouverture d'évacuation.

Pour éviter que la pression de dihydrogène généré ne soit trop élevée à l'intérieur de l'enceinte, le système catalytique décrit dans WO 2012/003112 A1 et WO 2010/051557 A1 comporte une membrane élastomère, se présentant sous la forme d'un tube cylindrique creux, fixée à la fois sur le corps et sur le couvercle. Le corps comporte en outre un drain débouchant hors de l'enceinte à l'une de ses extrémités et dans l'espace intérieur de la membrane à son extrémité opposée, de sorte que la pression dans l'espace intérieur de la membrane est égale à la pression atmosphérique. Ainsi, lorsque la pression de dihydrogène dans l'enceinte est supérieure à une pression seuil, le couvercle est poussé contre le corps sous l'effet de la pression dans l'enceinte, contractant la membrane élastomère par effet de torsion, jusqu'à la position fermée du système catalytique. Lorsque la pression dans l'enceinte est inférieure à la pression seuil, la membrane élastomère, cherchant à retrouver sa position d'équilibre, se déploie et dégage le couvercle dans la position ouverte du système catalytique, de sorte à permettre l'accès de la solution aqueuse d'hydrure au catalyseur.

Le contrôle de l'exposition du catalyseur à la solution aqueuse d'hydrure s'effectue dans WO 2012/003112 A1 et WO 2010/051557 A1 de manière passive, c'est-à-dire que l'ouverture et la fermeture du système catalytique s'opère uniquement en fonction de la pression de dihydrogène dans l'enceinte. Le système catalytique décrit dans ces deux documents est donc peu souple d'utilisation.

Le système catalytique de WO 2012/003112 A1 et de WO 2010/051557 A1 présente d'autres inconvénients.

Afin d'assurer une contraction et un déploiement optimal de la membrane élastomère, il est nécessaire que la hauteur de la membrane soit faible, ce qui limite l'accès au catalyseur de la solution aqueuse à base d'hydrure.

La pression seuil de fermeture du système catalytique est déterminée par la rigidité de la membrane élastomère qui dépend de la forme et des propriétés mécaniques, notamment élastiques, de la membrane élastomère. Le dimensionnement de la membrane est donc complexe pour assurer un fonctionnement optimal de l'appareil.

Par ailleurs, il n'est pas possible de contrôler l'ouverture et la fermeture du système catalytique indépendamment de la pression au sein de l'enceinte.

Il existe donc un besoin pour un appareil utile pour générer un gaz par mise en contact d'un liquide avec un catalyseur s'affranchissant des inconvénients précités.

Ce besoin est satisfait au moyen d'un appareil utile pour générer un gaz, l'appareil comportant
- une enceinte définissant un espace intérieur pour contenir un liquide apte à générer le gaz par mise en contact avec un catalyseur,
- un système catalytique comportant des première et deuxième pièces qui définissent ensemble une chambre de catalyse pour contenir le catalyseur,
- les première et deuxième pièces étant mobiles l'une par rapport à l'autre, de préférence en translation et/ou en rotation, entre une position fermée dans laquelle la chambre de catalyse est isolée de l'espace intérieur, et une position ouverte dans laquelle la chambre de catalyse est en communication fluidique avec l'espace intérieur,
   de telle sorte que lorsque le liquide et le catalyseur sont contenus respectivement dans l'espace intérieur et dans la chambre de catalyse, en position ouverte, le liquide pénètre dans la chambre de catalyse et le gaz est généré par mise en contact du liquide avec le catalyseur, et
- un actionneur relié au système catalytique et configuré pour disposer le système catalytique dans la position ouverte et/ou dans la position fermée, et
- une unité de commande pour commander l'actionneur.

Comme cela apparaîtra de manière plus détaillée par la suite, le rendement de dihydrogène généré par l'appareil selon l'invention est augmenté par rapport à celui généré par un appareil tel que décrit dans WO 2012/003112 A1, pour de mêmes quantités de solution aqueuse d'hydrure et de catalyseur et dans des conditions expérimentales identiques.

L'unité de commande est configurée pour émettre un signal de commande de manière à actionner directement ou indirectement l'actionneur. Comme cela apparaîtra par la suite, l'émission du signal de commande peut être indépendante de la pression du gaz dans l'enceinte. Autrement dit, selon l'invention, la génération de gaz peut être arrêtée indépendamment de la valeur de la pression du gaz dans l'enceinte. Notamment, en position fermée, la chambre de catalyse étant isolée de l'espace intérieur, lorsque le liquide et le catalyseur sont contenus dans l'espace intérieur et la chambre de catalyse respectivement, le liquide ne peut pas pénétrer dans la chambre de catalyse, l'étanchéité de la chambre de catalyse au liquide étant assurée par la liaison entre les première et deuxième pièces. L'appareil selon l'invention est ainsi de fonctionnement fiable.

Par « position ouverte », on entend toute position dans laquelle la chambre de catalyse est en communication fluidique avec l'espace intérieur. Le dispositif peut être disposé selon plusieurs positions ouvertes, qui diffèrent les unes des autres par la distance et/ou l'angle séparant les première et deuxième pièces. En particulier, le dispositif catalytique peut être disposé selon des première et deuxième positions ouvertes différentes l'une de l'autre, le volume de la chambre accessible au liquide dans la première position ouverte étant différent du volume de la chambre accessible au liquide dans la deuxième position ouverte. De cette façon, la cinétique de génération de gaz au moyen de l'appareil peut être modifiée en déplaçant le dispositif catalytique entre deux positions ouvertes différentes. En particulier, la position ouverte peut être une position ouverte extrêmale selon laquelle la course de l'actionneur est atteinte.

L'actionneur est de préférence fixé, par exemple rigidement, au système catalytique.

L'actionneur peut être est un vérin, notamment un vérin hydraulique ou un vérin électrique ou un vérin pneumatique, ou un moteur électrique.

De préférence, l'actionneur est un vérin. Un vérin présente l'avantage d'une facilité de mise en application entre les positions ouverte et fermée. Un tel vérin comporte classiquement un corps cylindrique dans lequel est logé un piston apte à se déplacer entre une position de déploiement et une position de repli, selon un mouvement de translation et/ou de rotation, selon ou autour respectivement d'une direction parallèle, notamment confondue avec l'axe du cylindre. De préférence, lorsque le vérin est hydraulique ou pneumatique, le vérin comporte en outre un organe de rappel configuré pour exercer une force sur le piston tendant à ramener le piston dans la position de repli.

De préférence, le corps cylindrique du vérin est fixé sur la première pièce et/ou sur l'enceinte. Le piston est fixé de préférence sur la deuxième pièce.

De préférence, le vérin est pneumatique. Un vérin pneumatique présente l'avantage de ne pas nécessiter de dispositif d'alimentation électrique de puissance pour assurer son fonctionnement. Il peut notamment être alimenté à partir d'une réserve de fluide compressible sous pression.

En variante, le vérin peut être hydraulique. Selon une autre variante, il peut être électrique.

L'actionneur n'est toutefois pas limité à un vérin. Dans une variante, l'actionneur peut être un moteur, notamment électrique, par exemple un moteur pas à pas.

De préférence, dans au moins l'une des positions ouverte et fermée du système catalytique, au moins une partie du vérin est disposée dans la chambre de catalyse. Ainsi, l'empiétement du vérin sur le volume de l'enceinte accessible au liquide est limité.

Par ailleurs, les première et deuxième pièces peuvent être mobiles en translation l'une par rapport à l'autre entre les positions ouverte et fermée, la direction de translation étant parallèle à l'axe longitudinal du vérin.

L'appareil peut comporter une vanne de commande reliée à l'unité de commande et au vérin, la vanne de commande étant configurée pour recevoir un signal de commande en provenance de l'unité de commande et pour délivrer une quantité de fluide sous pression au vérin et/ou pour purger le vérin dudit fluide, suite à la réception dudit signal de commande.

En particulier, afin d'alimenter le vérin, l'appareil peut comporter un organe d'alimentation en fluide sous pression relié à la vanne de commande.

Dans une variante, le fluide est pneumatique, notamment gazeux, et l'organe d'alimentation en fluide peut être une cartouche présentant un réservoir dans lequel le fluide pneumatique est stocké sous pression. De préférence, la cartouche est reliée de manière amovible à la vanne de commande.

Dans une autre variante, l'organe d'alimentation en fluide peut être un ensemble formé d'un réservoir comportant le fluide, par exemple à pression atmosphérique, relié à un compresseur dans le cas où le fluide est gazeux, ou à une pompe dans le cas où le fluide est liquide, par exemple une huile, pour comprimer le fluide provenant du réservoir à une pression supérieure à la pression atmosphérique. Le compresseur ou la pompe le cas échéant peut être en communication fluidique, par exemple par l'intermédiaire d'un tuyau, avec la vanne de commande, pour convoyer le fluide sous pression à travers la vanne de commande vers l'actionneur.

Dans une variante, notamment lorsque l'organe d'alimentation en fluide est l'ensemble tel que décrit au paragraphe précédent, l'organe d'alimentation en fluide, le vérin et la vanne de commande définissent un circuit fermé pour le fluide. Autrement dit, l'écoulement du fluide s'opère uniquement de l'organe d'alimentation fluidique vers le vérin à travers la vanne de commande lors de l'alimentation du fluide sous pression dans le cylindre du vérin, et en sens inverse lors de la purge du vérin.

Par fluide, notamment gazeux, « sous pression », on entend que la pression du fluide est supérieure à la pression atmosphérique. De préférence, la pression du fluide est supérieure à 1,1 bar, de préférence supérieure à 1,5 bar, voire supérieure à 2 bar. La « pression » est définie par rapport à la référence de pression nulle dans le vide. Le fluide peut être un gaz choisi parmi l'air, le dioxyde de carbone, l'argon, le diazote ou l'isobutane. L'isobutane est préféré car il se liquéfie à 20°C à une pression de 1,6 bar. L'isobutane peut être introduit sous pression dans le réservoir, de sorte qu'au moins une partie du réservoir est rempli d'isobutane sous forme liquide. L'isobutane sous forme liquide peut passer en phase gazeuse lorsqu'il est soumis à la pression atmosphérique. En variante, le fluide peut être un fluide, et notamment une huile.

Par ailleurs, l'appareil peut comporter une unité d'alimentation électrique, par exemple une batterie. De préférence, l'unité d'alimentation électrique est configurée pour délivrer une puissance électrique d'alimentation à l'unité de commande. En outre, notamment en fonction du type d'actionneur, l'unité d'alimentation électrique peut être configurée pour fournir une puissance d'alimentation électrique à d'autres unités et organes de l'appareil.

En particulier, dans la variante où l'actionneur est un vérin pneumatique ou hydraulique, l'unité d'alimentation électrique peut être configurée pour délivrer une puissance d'alimentation à la vanne de commande et/ou à l'unité de commande pour mettre en œuvre l'ouverture et la fermeture de la vanne de commande et ainsi alimenter ou purger respectivement le vérin. Le cas échéant, elle peut être reliée au compresseur ou à la pompe pour les alimenter électriquement.

Dans la variante où l'actionneur est un vérin électrique ou un moteur électrique, l'unité d'alimentation électrique peut être reliée électriquement à l'actionneur pour opérer le déplacement du piston du vérin électrique ou la rotation du moteur.

En ce qui concerne l'unité de commande, elle est configurée pour émettre un signal de commande, de manière à commander directement ou indirectement l'actionneur afin que l'actionneur dispose le système catalytique dans la position ouverte ou dans la position fermée.

L'unité de commande peut commander directement l'actionneur. Par exemple l'actionneur est un moteur électrique et l'unité de commande est reliée électriquement directement au moteur électrique.

En variante, l'unité de commande peut commander indirectement l'actionneur. Par exemple, l'actionneur est un vérin, et l'unité de commande peut envoyer un signal de commande à la vanne de commande, de sorte que l'ouverture ou la fermeture de la vanne de commande entraîne un mouvement du vérin.

De préférence, le signal de commande est un signal électrique.

L'unité de commande peut être configurée pour commander l'actionneur selon au moins un mode de pilotage paramétré au moyen d'au moins un paramètre de pilotage.

Le mode de pilotage peut être un mode de pilotage de régulation, tel qu'il sera décrit par la suite, ou un mode de pilotage spécifique, différent du mode de pilotage de régulation.

L'unité de commande comporte de préférence un processeur adapté à l'exécution d'un programme d'ordinateur, dénommé programme de pilotage, pour la mise en œuvre d'au moins un mode de pilotage. Le programme d'ordinateur peut comporter des instructions pour lire et interpréter les paramètres de pilotage.

L'appareil peut comporter un module de stockage, par exemple un disque dur d'ordinateur ou une mémoire Flash, dans lequel ledit programme de pilotage et/ou les paramètres de pilotage peuvent être stockés.

En variante, l'appareil peut comporter un module de lecture configuré pour lire un média de stockage, par exemple une clé USB ou une carte SSD, et le programme de pilotage et/ou les paramètres du programme de pilotage peuvent être stockés dans ledit média de stockage. Selon une autre variante, le module de lecture peut comporter une unité de saisie, par exemple un clavier ou un écran tactile, adapté à la saisie des paramètres de pilotage. Notamment, l'unité de saisie peut comporter un organe de réglage d'au moins un paramètre de pilotage, par exemple sous la forme d'un bouton rotatif, la position angulaire du bouton rotatif définissant la valeur à laquelle est fixée le paramètre de pilotage.

L'unité de saisie peut être configurée de sorte que le paramètre de pilotage peut être réglé avant et modifié au cours de la génération du gaz. Ainsi, lorsque les paramètres de pilotage sont par exemple les pressions minimale et maximale de régulation comme cela sera décrit ci-après, il est possible de modifier lesdites les pressions minimale et maximale de régulation, pour adapter le débit généré en fonction des besoins en gaz de l'application pour lequel le gaz est généré par l'appareil.

Le mode de pilotage préféré est un mode de pilotage de régulation.

En particulier, selon le mode de régulation, le ou les paramètres de pilotage comportent de préférence au moins un, de préférence au moins deux paramètres de régulation.

De préférence, l'unité de commande est configurée pour effectuer une comparaison d'au moins une grandeur à réguler avec le au moins un paramètre de régulation, dite comparaison de régulation, et est configurée pour envoyer un signal de commande en fonction du résultat de la comparaison de régulation.

De préférence, le mode de régulation est paramétré au moyen de paramètres de pilotage comportant des premier et deuxième paramètres de régulation, et l'unité de commande est configurée pour recevoir une grandeur à réguler et pour commander l'actionneur de sorte à disposer le système catalytique selon une première position et selon une deuxième position, lorsque la grandeur à réguler est inférieure au premier paramètre de régulation et respectivement supérieure au deuxième paramètre de régulation. Les première et deuxième positions peuvent être des positions ouvertes, de préférence différentes l'une de l'autre. Selon une variante préférée, la première position est une position ouverte et la deuxième position est la position fermée.

La grandeur à réguler peut être choisie parmi la pression de gaz dans l'espace intérieur, la pression de gaz dans une machine, de préférence une pile à combustible, avec laquelle l'appareil est en communication fluidique, le débit de gaz généré et une température, par exemple la température du liquide ou la température du catalyseur ou la température de l'environnement de l'appareil.

De préférence, la grandeur à réguler est la pression de gaz dans l'espace intérieur, et les premier et deuxième paramètres de régulation sont respectivement des pression minimale de régulation et pression maximale de régulation.

De préférence, l'unité de commande est configurée pour envoyer un signal de commande à la vanne de commande, en vue de disposer le système catalytique dans une première position, respectivement dans une deuxième position, lorsque la pression de gaz dans l'espace intérieur est inférieure ou égale à la pression minimale de régulation, respectivement supérieure ou égale à la pression maximale de régulation. Les première et deuxième positions peuvent être des positions ouvertes. De préférence, les première et deuxième positions sont respectivement une position ouverte et une position fermée.

La pression minimale de régulation et/ou la pression maximale de régulation peuvent être définies par l'utilisateur de l'appareil. En particulier, elles peuvent être déterminées en fonction de l'application à laquelle la génération de gaz est destinée. Avantageusement, par modification des pressions minimale et/ou maximale de régulation, l'appareil peut assurer une génération de gaz à débit de consigne constant et à une pression adaptée à l'application à laquelle le gaz est destiné.

Comme cela a été décrit précédemment, l'unité de commande peut être configurée pour exécuter au moins un mode de pilotage spécifique différent du mode de régulation.

En particulier, selon au moins un mode de pilotage spécifique, l'unité de commande peut être configurée pour maintenir le système catalytique dans la position ouverte et/ou dans la position fermée pendant une durée de maintien. La durée de maintien est un paramètre de pilotage du mode de pilotage spécifique et est de préférence indépendante d'au moins un, et notamment de tous les paramètres de régulation du mode de régulation.

Par exemple, selon une variante, le mode de pilotage spécifique est un mode de pilotage à froid, selon lequel l'unité de commande est configurée pour :
- optionnellement disposer le système catalytique dans la position ouverte pendant une première durée de maintien, puis
- pour disposer le système catalytique dans la position fermée pendant une deuxième durée de maintien.

La première durée de maintien peut être inférieure d'au moins 10 fois à la deuxième durée de maintien. Par exemple, la première durée de maintien est de 1 seconde, puis la deuxième durée de maintien est de 60 secondes.

Par ailleurs, de préférence, l'appareil comporte une unité de contrôle configurée pour :
- recevoir au moins une grandeur à contrôler,
- analyser la grandeur à contrôler, notamment par comparaison de la grandeur à contrôler avec au moins un paramètre de contrôle, et
en fonction du résultat de l'analyse,
- générer un signal de pilotage selon le mode de régulation ou un mode de pilotage spécifique différent du mode de régulation, et
- envoyer le signal de pilotage à l'unité de commande qui est configurée pour recevoir ledit signal de pilotage et exécuter le mode de pilotage correspondant au signal de pilotage.

De préférence, la grandeur à contrôler dépend du mode de pilotage à exécuter par l'unité de commande. En particulier, la grandeur à contrôler peut être différente pour deux modes de pilotage différents. Par exemple, selon le mode de régulation, la grandeur à contrôler peut être le débit de gaz généré et/ou la température dans la chambre et, selon le mode de pilotage à froid, la grandeur à contrôler peut être la pression de gaz généré.

La grandeur à contrôler peut être choisie parmi la pression de gaz dans l'espace intérieur, la pression de gaz dans une machine avec laquelle l'appareil, de préférence une pile à combustible, est en communication fluidique, le débit de gaz généré et une température, par exemple la température du liquide ou la température du catalyseur ou la température de l'environnement de l'appareil.

De préférence, selon le mode de régulation dans lequel la grandeur à réguler est la pression de gaz dans l'espace intérieur, l'unité de contrôle est configurée pour analyser, notamment conjointement, le débit de gaz généré, la température du liquide, la température du catalyseur et la température de l'environnement de l'appareil, de préférence le débit et la température du catalyseur.

Selon le mode de régulation, la grandeur à contrôler est de préférence différente de la grandeur à réguler.

Par ailleurs, l'unité de contrôle comporte de préférence un processeur adapté à l'exécution d'un programme d'ordinateur, dénommé programme d'analyse, pour analyser la grandeur à contrôler avec le au moins un paramètre de contrôle.

Le programme d'analyse et/ou les paramètres d'analyse peuvent être stockés dans le module de stockage ou lus par le module de lecture tel que décrit précédemment et le programme d'analyse peut comporter des instructions pour lire et interpréter les paramètres de contrôle.

De préférence, l'analyse de la grandeur à comparer dépend du mode de pilotage exécuté par l'unité de commande. En particulier, le programme d'analyse peut comporter des séries d'instructions spécifiques à un au moins un mode de pilotage.

En particulier, l'unité de contrôle peut être configurée pour recevoir sur une durée d'analyse, par exemple inférieure à 2 secondes, notamment inférieure à 1 seconde, une pluralité de valeurs de la grandeur à contrôler, et formuler un résultat de l'analyse suite à la comparaison de chacune des valeurs de la grandeur à contrôler avec un paramètre de contrôle. Notamment, si le résultat du contrôle est que chaque valeur de la pluralité est inférieure au paramètre de contrôle, l'unité de contrôle peut émettre et envoyer un signal de pilotage selon un mode spécifique ou selon le mode de régulation, à destination de l'unité de commande.

Par exemple, selon un exemple du mode de régulation, l'unité de contrôle est configurée pour recevoir et analyser deux grandeurs à contrôler étant le débit de gaz généré et la température du catalyseur, l'analyse étant conduite par comparaison de chacune desdites grandeurs à contrôler avec un paramètre de contrôle respectif, respectivement un débit de consigne et une température de consigne, tout au cours de la durée d'analyse. Ainsi, si au cours de la durée d'analyse, le débit de gaz généré est inférieur au débit de consigne et/ou la température du catalyseur est inférieure à la température de consigne, l'unité de contrôle est configurée pour envoyer à l'unité de commande un signal de pilotage en mode de pilotage à froid.

De préférence, l'unité de contrôle est configurée pour analyser, notamment conjointement, au moins deux grandeurs de contrôle différentes l'une de l'autre, par exemple le débit de gaz généré et au moins une température, par exemple la température du catalyseur.

Dans la variante où le mode de pilotage est le mode de régulation, les grandeurs à contrôler peuvent être la température du liquide et la pression de gaz contenu dans l'espace intérieur et les paramètres de contrôle peuvent être une température maximale du liquide et une pression maximale du gaz.

Dans la variante où le mode de pilotage est le mode de pilotage à froid, les grandeurs à contrôler peuvent être la température du catalyseur et la pression de gaz dans l'espace intérieur et les paramètres de contrôle peuvent être une température de consigne du catalyseur et des pressions minimale et maximale de consigne, par exemple égales respectivement à la pression minimale de régulation et à la pression maximale de régulation. L'unité de contrôle peut être configurée pour émettre un signal de pilotage, par exemple en mode de régulation, dès que la température du catalyseur est supérieure à la température de consigne du catalyseur et dès que la pression du gaz dans l'enceinte est supérieure à la pression de consigne.

Comme cela a été décrit précédemment, l'unité de commande et l'unité de contrôle sont configurées pour recevoir respectivement au moins une grandeur à réguler et au moins une grandeur à contrôler.

De préférence, l'appareil comporte au moins une unité de mesure d'une grandeur choisie parmi la pression de gaz dans l'espace intérieur, la pression de gaz dans une machine, de préférence une pile à combustible, avec laquelle l'appareil est en communication fluidique, le débit de gaz généré et une température, par exemple la température du liquide ou la température du catalyseur ou la température de l'environnement de l'appareil. L'unité de mesure est en outre configurée pour envoyer ladite grandeur mesurée à l'unité de commande et/ou à l'unité de contrôle. L'unité de mesure peut être reliée électriquement à l'unité de commande et/ou à l'unité de contrôle et elle peut être configurée pour envoyer la valeur mesurée de la grandeur sous la forme d'un signal électrique.

Dans un mode de réalisation, l'unité de mesure est disposée dans l'espace intérieur.

De préférence, l'appareil comporte au moins deux unités de mesure, qui de préférence sont chacune configurées pour mesurer des grandeurs différentes. En particulier, l'appareil peut comporter une unité de mesure de la pression de gaz dans l'espace intérieur, une unité de mesure du débit de gaz généré, et au moins une unité de mesure d'une température.

En fonction du mode de pilotage à mettre en œuvre par l'unité de commande, la grandeur mesurée peut être une grandeur à contrôler et/ou une grandeur à réguler.

Par ailleurs, l'appareil peut comporter une unité d'interruption comportant un interrupteur, par exemple électrique, apte à être disposé dans une configuration allumée ou éteinte par un utilisateur de l'appareil. L'unité d'interruption est configurée pour générer un signal d'interruption et envoyer ledit signal d'interruption à l'unité de commande, qui est configurée pour le recevoir, en vue de commander la fermeture, respectivement l'ouverture du système catalytique, lorsque l'interrupteur est disposé dans la configuration éteinte, respectivement dans la configuration allumée.

L'appareil peut comporter l'unité de contrôle et l'unité d'interruption. De préférence, l'unité de commande est configurée pour traiter uniquement le signal d'interruption, lorsque l'unité de contrôle et l'unité de commande envoient chacune conjointement un signal de pilotage et un signal d'interruption en direction de l'unité de commande.

Par ailleurs, l'appareil peut comporter une unité d'alarme, configurée pour émettre un signal, par exemple sonore ou lumineux.

De préférence, l'enceinte comporte une ouverture d'évacuation du gaz. L'appareil comporte de préférence une unité de mesure de pression configurée pour mesurer la pression du gaz. L'unité de mesure de pression comporte de préférence un capteur de pression qui peut être disposé dans l'ouverture d'évacuation. Dans une variante, l'ouverture d'évacuation du gaz peut être obturée, ou respectivement ouverte, par exemple au moyen d'une valve, de préférence régulatrice de débit, de sorte à empêcher, respectivement autoriser l'évacuation du gaz de l'enceinte, lorsque la pression du gaz dans l'enceinte est inférieure, respectivement supérieure ou égale à une pression d'évacuation. Par exemple, la pression d'évacuation peut être supérieure à 4 bar. L'unité de commande peut être configurée pour commander l'ouverture et la fermeture de la valve. En variante, la valve peut être formée en un matériau déformable élastique configuré pour empêcher, respectivement autoriser l'évacuation du fluide de l'enceinte lorsque la pression de fluide est inférieure, respectivement supérieure ou égale à la pression d'évacuation.

De préférence, le système catalytique est disposé dans l'espace intérieur de l'enceinte. La mise en communication fluidique du système catalytique avec l'espace intérieur de l'enceinte est ainsi facilitée en position ouverte du système catalytique.

De préférence, le système catalytique est intégralement immergé dans le liquide. La génération de gaz dans l'appareil peut être stoppée dans une telle configuration, par exemple suite à l'envoi d'un signal de commande de fermeture à la vanne de commande, notamment lorsque la pression du gaz dans l'enceinte ne résulte en aucune force de compression sur le système catalytique.

Dans un mode de réalisation, l'appareil comporte le catalyseur. De préférence, le catalyseur est un métal, de préférence adapté à catalyser l'hydrolyse d'une solution à base d'hydrure. Un catalyseur particulièrement préféré est choisi parmi le cobalt, le nickel, le platine, le ruthénium et leurs alliages.

Par ailleurs, l'appareil peut comporter le liquide, contenu dans l'espace intérieur de l'enceinte. De préférence, le liquide est une solution aqueuse comportant un hydrure tel que décrit ci-après.

De préférence, au moins une portion du catalyseur est fixée sur la première pièce et/ou sur la deuxième pièce. Dans un exemple de réalisation, le catalyseur est fixé seulement sur la première pièce ou seulement sur la deuxième pièce.

Le catalyseur peut être disposé de sorte à être mobile ou à être fixe par rapport à l'enceinte lors du passage de la position ouverte à la position fermée.

Par ailleurs, l'appareil est conformé de sorte que, dans la position ouverte du système catalytique, lorsque l'enceinte contient le liquide, plus de 50%, de préférence plus de 80%, de préférence plus de 90%, voire notamment toute la surface du catalyseur exempte de contact avec la première pièce et/ou avec la deuxième pièce est au contact du liquide. On améliore ainsi avantageusement la cinétique de la réaction de génération du gaz par mise en contact du liquide avec le catalyseur.

De préférence, pour faciliter l'accès du liquide au catalyseur, la course du piston du vérin est égale ou supérieure à l'épaisseur du catalyseur, ladite épaisseur étant mesurée selon une direction parallèle à l'axe selon lequel se déploie le piston.

Le catalyseur peut se présenter sous différentes formes, notamment sous la forme d'un revêtement, par exemple déposé par dépôt chimique en phase vapeur ou dépôt physique en phase vapeur, disposé sur une face d'une paroi de la première pièce et/ou sur une face d'une paroi de la deuxième pièce qui définissent au moins partiellement la chambre de catalyse. De préférence, le revêtement présente une épaisseur inférieure à 1 mm. Sous la forme d'un revêtement, le rapport de la surface accessible au liquide sur le volume de catalyseur est optimal. Par ailleurs, une telle forme du catalyseur favorise la fabrication d'un système catalytique compact, qui lorsqu'il est disposé dans l'espace intérieur de l'enceinte, empiète peu le volume accessible au liquide.

Dans une variante, le catalyseur peut se présenter sous la forme d'un bloc, présentant une épaisseur supérieure à 1 mm. Par exemple, le bloc peut présenter une forme d'une pastille, ou d'un tube creux cylindrique de révolution.

De préférence, la première pièce est fixe par rapport à l'enceinte et la deuxième pièce est mobile par rapport à l'enceinte entre les positions ouverte et fermée. De préférence, le système catalytique, de préférence la deuxième pièce est fixée, notamment rigidement, à l'actionneur. En particulier dans la variante où l'actionneur est un vérin, la deuxième pièce est fixée, de préférence rigidement, au piston du vérin, de préférence à l'extrémité du piston disposée en position ouverte hors du corps cylindrique du vérin.

Les première et deuxième pièces peuvent être de forme variée. La première pièce peut présenter une forme de récipient pour contenir le catalyseur. En particulier, dans la variante où l'appareil comporte le catalyseur, le catalyseur est par exemple disposé dans l'espace intérieur du récipient ou revêt par exemple au moins une, voire toutes les faces des parois du récipient qui définissent au moins partiellement la chambre de catalyse. De préférence, le récipient comporte au moins une ouverture, et la deuxième pièce présente une forme d'un couvercle, par exemple une forme d'une plaque, adapté pour obturer l'ouverture du récipient dans la position fermée.

Dans une variante, la première pièce présente une forme d'une plaque. En particulier, la plaque peut être recouverte d'un revêtement formé par le catalyseur. De préférence alors, la deuxième pièce présente de préférence une forme d'une cloche, de sorte qu'en position fermée, la deuxième pièce repose sur la première pièce et isole la chambre de catalyse de l'espace intérieur.

De préférence, quelle que soit la forme des première et deuxième pièces, pour assurer l'étanchéité de la chambre de catalyse au liquide en position fermée, la première pièce et/ou la deuxième pièce peuvent comporter un joint d'étanchéité, qui en position fermée est pris en sandwich et comprimé entre les première et deuxième pièces. En variante, la deuxième pièce peut être recouverte d'un matériau souple, ou être constituée d'un matériau souple, afin d'assurer l'étanchéité en position fermée.

En ce qui concerne la chambre de catalyse définie par le système catalytique, son volume est de préférence supérieur à 1 ml.

Dans un mode particulier de l'invention, une paroi de la première pièce, respectivement de la deuxième pièce, peut comporter au moins une fenêtre traversant ladite paroi dans son épaisseur, la fenêtre de la première pièce, respectivement de la deuxième pièce, étant intégralement obturée par la deuxième pièce, respectivement par la première pièce dans la position fermée du système catalytique, et les fenêtres des première et deuxième pièces définissant un chemin d'accès au liquide à travers les parois des première et deuxième pièces vers la chambre de catalyse dans la position ouverte du système catalytique. Ainsi, l'accès du liquide dans la chambre de catalyse est facilité et un échange optimal par convection du liquide avec le catalyseur peut s'opérer. Selon une variante, lesdites parois des première et deuxième pièces peuvent s'étendre transversalement à l'axe de déploiement du piston. Selon une autre variante, les première et deuxième pièces sont mobiles en rotation l'une par rapport à l'autre entre les positions ouverte et fermée. Les première et deuxième pièces peuvent comporter des portions tubulaires creuses et cylindriques de révolution d'axe confondu avec l'axe autour duquel s'effectue la rotation, et la paroi de la première pièce, respectivement de la deuxième pièce, comportant lesdites pluralités de fenêtres est la paroi latérale de la portion cylindrique respective.

L'appareil selon l'invention peut encore comporter une membrane étanche au liquide et perméable au fluide, et disposée dans l'enceinte de sorte à séparer l'espace intérieur en un espace contenant le liquide et un espace contenant le gaz généré. Par ailleurs, l'appareil peut comporter un filtre, par exemple monté sur l'ouverture d'évacuation, configuré pour purifier le gaz généré.

Par ailleurs, l'invention concerne un procédé de génération d'un gaz dans lequel on dispose d'un appareil selon l'invention, l'espace intérieur de l'enceinte contenant un liquide apte à générer le gaz par contact avec un catalyseur, la chambre de catalyse du système catalytique contenant ledit catalyseur, le procédé étant mis en œuvre selon un mode de pilotage paramétré au moyen de premier et deuxième paramètres de régulation, dit mode de régulation, le procédé comportant les étapes consistant à mesurer une grandeur à réguler et à commander l'actionneur pour disposer le système catalytique en position ouverte, respectivement en position fermée, lorsque la grandeur à réguler est inférieure, respectivement supérieure au premier paramètre de régulation, respectivement au deuxième paramètre de régulation.

D'une façon particulièrement préférée :
- le gaz est le dihydrogène,
- le liquide est une solution aqueuse comportant un hydrure, de préférence choisi parmi le borohydrure de sodium, le borohydrure de potassium, le borohydrure de magnésium, le borohydrure de calcium, le borohydrure de lithium, l'hydrure de lithium aluminium, l'hydrure de magnésium, l'hydrure de sodium aluminium et leurs mélanges, et
- le catalyseur est adapté à catalyser la réaction d'hydrolyse de la solution aqueuse, et est choisi de préférence parmi le platine, le ruthénium, le nickel, le cobalt et leurs mélanges.

Par ailleurs, le liquide peut comporter un agent alcalin, de préférence choisi parmi NaOH, KOH et leurs mélanges. On limite ainsi la décomposition spontanée de l'hydrure. Lorsque le système catalytique est en position fermée, on limite ainsi la montée en pression du gaz dans l'enceinte. Lorsque le système catalytique est en position ouverte, on assure ainsi que la décomposition de l'hydrure résulte majoritairement de son hydrolyse catalysée.

Par ailleurs, le procédé selon l'invention est tel que la grandeur à réguler peut être choisie parmi la pression de gaz dans l'espace intérieur, la pression du gaz dans une machine avec laquelle l'appareil, de préférence une pile à combustible, est en communication fluidique, le débit de gaz généré et une température, par exemple la température du liquide ou la température du catalyseur ou la température de l'environnement de l'appareil, et les premier et deuxième paramètres de régulation sont des valeurs respectivement minimale et maximale de la grandeur à réguler.

De préférence, la grandeur à réguler est la pression de gaz dans l'espace intérieur ou la pression du gaz dans une machine avec laquelle l'appareil, de préférence une pile à combustible, est en communication fluidique, et les premier et deuxième paramètres de régulation sont des pression minimale de régulation et pression maximale de régulation.

De préférence, selon le mode de régulation, le nombre de cycles, constitué chacun de la disposition du système catalytique dans une première position puis dans une deuxième position, de préférence constitué chacun d'une ouverture et d'une fermeture du système catalytique, peut être compris entre 1 et 10000. La durée d'un cycle peut être comprise entre 1 seconde et 10 heures.

En particulier, le procédé comporte une pluralité de cycles et la pression minimale de régulation et/ou la pression maximale de régulation peuvent être modifiées entre deux cycles successifs, voire consécutifs.

Par exemple, la pression minimale de régulation définie pour un deuxième cycle successif, voire consécutif, à un premier cycle peut être inférieure à la pression de régulation défini pour le premier cycle, et/ou la pression maximale de régulation définie pour ledit deuxième cycle successif peut être supérieure à la pression de régulation défini pour le premier cycle.

En variante, la pression minimale de régulation définie pour un deuxième cycle successif, voire consécutif, à un premier cycle peut être supérieure à la pression de régulation défini pour le premier cycle, et/ou la pression maximale de régulation définie pour ledit deuxième cycle successif peut être inférieure à la pression de régulation défini pour le premier cycle.

En particulier, les pressions minimale et maximale de régulation définies pour un deuxième cycle successif, voire consécutif, à un premier cycle, peuvent être modifiées de sorte que la moyenne arithmétique desdites pressions minimale et maximale de régulation audit deuxième cycle est égale à la moyenne arithmétique desdites pressions minimale et maximale de régulation audit premier cycle.

Dans une variante, les pressions minimale et maximale de régulation définies pour un deuxième cycle successif, voire consécutif, à un premier cycle, peuvent être telles que la différence entre la pression maximale de régulation et la pression minimale de régulation audit deuxième cycle soit égale à la différence entre la pression maximale de régulation et la pression minimale de régulation audit premier cycle, et de préférence, la moyenne arithmétique desdites pressions minimale et maximale de régulation audit deuxième cycle est différente, notamment supérieure ou inférieure, de la moyenne arithmétique desdites pressions minimale et maximale de régulation audit premier cycle.

Par ailleurs, selon un mode de mise en œuvre préféré :
- on mesure au moins une, de préférence plusieurs, grandeur à contrôler,
- on analyse la grandeur à contrôler, notamment en la comparant avec au moins un paramètre de contrôle, et
en fonction du résultat de l'analyse,
- on cesse de piloter le procédé selon le mode de régulation puis on pilote le procédé selon un mode de pilotage spécifique différent du mode de régulation.

De préférence :
- les grandeurs à contrôler sont la température du liquide et/ou la température de l'environnement de l'appareil et/ou la température du catalyseur, et les paramètres de contrôle sont respectivement une température de contrôle minimale du liquide et/ou une température de contrôle minimale d'environnement et/ou une température de contrôle minimale du catalyseur,
- on procède à l'analyse consistant à vérifier si pendant une durée d'analyse, de préférence comprise entre 0,1 et 2 secondes, la température du liquide et/ou la température de l'environnement de l'appareil et/ou la température du catalyseur sont respectivement inférieures à la température de contrôle minimale du liquide et/ou une température de contrôle minimale d'environnement et/ou à la température de contrôle minimale du catalyseur, et si tel est le cas,
- on cesse de piloter le procédé selon le mode de régulation puis on pilote le procédé selon un mode de pilotage à froid dans lequel :
   i) optionnellement, on commande l'actionneur de sorte à disposer le système catalytique en position ouverte, de préférence pendant une durée comprise entre 1 et 10 secondes, puis
   ii) on commande l'actionneur de sorte à disposer et maintenir le système catalytique en position fermée tant que la pression du gaz dans l'enceinte est inférieure à une pression maximale de consigne qui est de préférence supérieure ou égale à la pression maximale de régulation,
   iii) on commande l'actionneur de sorte à disposer et maintenir le système catalytique en position ouverte et on ouvre l'enceinte de sorte que le gaz généré s'évacue de l'enceinte, et
      - si au cours de l'étape iii) la pression de gaz mesurée devient inférieure puis supérieure à une pression minimale de consigne, qui est de préférence inférieure ou égale à la pression minimale de régulation, on cesse de piloter le procédé selon le mode de pilotage à froid et, de préférence on pilote le procédé selon le mode de régulation,
      - sinon on effectue les étapes i) et ii).

De préférence, la température de contrôle minimale du liquide et/ou la température de contrôle minimale d'environnement et/ou la température de contrôle minimale du catalyseur sont égales à -10°C, voire égales à -20°C.

De cette façon, en disposant le liquide dans la chambre de catalyse puis le système catalytique en position fermée à l'étape ii), on favorise la génération de gaz par effet de confinement du liquide et du catalyseur dans la chambre de catalyse isolée de l'enceinte. La réaction de génération de gaz étant exothermique, la température du catalyseur augmente, ce qui rend le catalyseur plus réactif pour la réaction de génération de gaz lors des cycles ultérieurs d'ouverture de fermeture successifs en mode de régulation, ce qui permet d'atteindre plus rapidement un débit de consigne. Le système catalytique étant disposé en configuration fermée à l'étape ii) du mode de pilotage à froid, le liquide situé dans l'enceinte ne peut pénétrer dans la chambre de catalyse et la génération de gaz s'arrête lorsque les réactifs du liquide préalablement piégés dans la chambre de catalyse sont consommés.

Dans un mode de mise en œuvre, le procédé comporte une étape de transport du gaz généré par l'appareil hors de l'enceinte, et de préférence au sein d'une chambre anodique d'une pile à combustible. La pression du gaz peut alors être mesurée dans ladite chambre anodique. Ainsi, la quantité en gaz généré par l'appareil est adaptée aux conditions de fonctionnement de la pile à combustible.

Enfin, l'invention concerne un dispositif de production d'énergie électrique, le dispositif comportant
- une pile à combustible configurée pour générer un courant électrique par oxydation d'un gaz,
- un appareil de génération de gaz selon l'invention, en communication de fluide avec la pile à combustible et configuré pour alimenter la pile à combustible en ledit gaz.

La pile à combustible comporte de préférence une unité d'oxydation comportant un empilement formé en succession d'une anode, d'une membrane électrolytique et d'une cathode, l'unité d'oxydation étant configurée pour générer un courant électrique par oxydation du gaz. La pile à combustible définit de préférence une chambre anodique pour l'alimentation de l'anode en gaz.

Le dispositif comporte de préférence un organe de distribution liant l'appareil et la pile à combustible en communication de fluide. De préférence l'organe de distribution est fixé sur l'ouverture d'évacuation de l'appareil et débouche dans la chambre anodique de la pile à combustible.

Dans un mode de réalisation, l'unité de mesure peut être adaptée à mesurer la pression du gaz dans la chambre anodique. De préférence, l'unité de mesure est disposée dans la chambre anodique. Ainsi, l'ouverture et la fermeture du système catalytique sont aisément pilotées de façon à optimiser un fonctionnement sûr de la pile à combustible.

Par ailleurs, l'unité de commande peut être configurée pour envoyer un signal de mise en service et/ou un signal d'extinction à destination de la pile à combustible qui est configurée pour recevoir le signal de mise en service et/ou le signal d'extinction respectivement, et pour être disposée en mode de génération d'énergie et/ou en mode inactif.

D'autres caractéristiques, variantes et avantages de l'invention ressortiront mieux à la lecture de la description détaillée et des exemples qui vont suivre, donnés à titre illustratif et non limitatif, et à l'examen du dessin annexé, sur lesquels :
- les figures 1 à 3 représentent de manière schématique un appareil selon différents modes de réalisation de l'invention,
- les figures 4 à 6 représentent des enceintes et systèmes catalytiques d'appareils selon différents modes de réalisation de l'invention vus en coupe longitudinale,
- les figures 7 et 8 d'une part et 9 et 10 d'autre part représentent des enceintes et systèmes catalytiques d'appareils selon différents modes de réalisation de l'invention vus en coupe longitudinale en position fermée, respectivement ouverte,
- les figures 11 et 12 représentent le système catalytique des figures 9 et 10 respectivement, vu en perspective,
- la figure 13 représente un dispositif selon un exemple de réalisation de l'invention,
- la figure 14 est un graphe représentant la variation de pression du gaz au sein de l'enceinte lors d'un exemple de mise en œuvre du procédé selon l'invention,
- la figure 15 est un graphe représentant la variation de pression au cours du temps lors d'une mise en œuvre du procédé selon l'invention et d'un procédé de l'art antérieur, et
- les figures 16 et 17 illustrent les variations de pression dans l'enceinte, du débit de gaz généré, de la température du catalyseur et de température de l'environnement au cours d'un exemple de mise en œuvre du procédé.

Dans les figures, les échelles et proportions des différents organes et unités constituant l'appareil et le dispositif ne sont pas nécessairement respectées. Par ailleurs, par souci de clarté, des organes peuvent être représentés comme n'étant pas au contact les uns des autres alors qu'ils le sont en pratique. Des références différentes peuvent désigner un même organe.

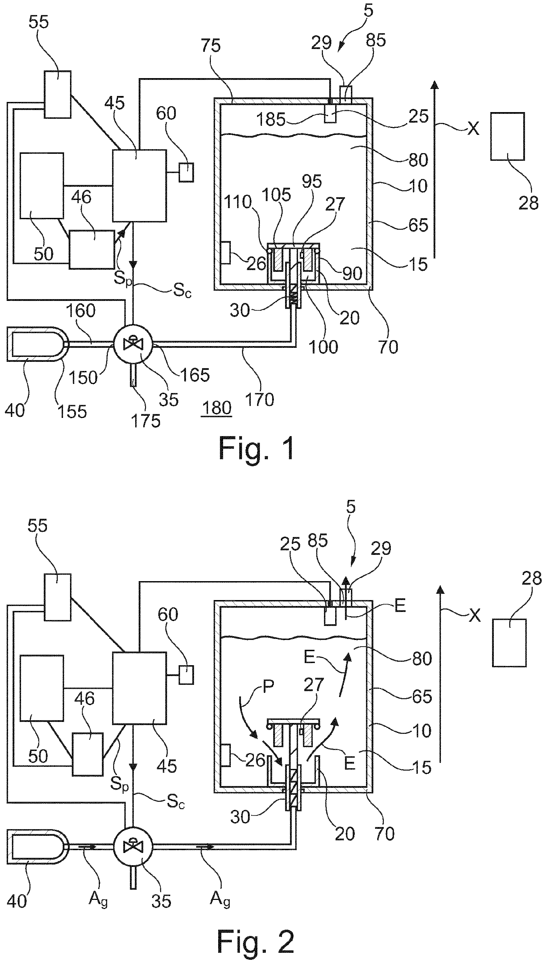

La figure 1 représente un premier mode de réalisation de l'appareil selon l'invention.

L'appareil 5 comporte :
- une enceinte 10 définissant un volume intérieur 15 dans lequel sont disposés un système catalytique 20 et une unité de mesure de pression 25, des unités de mesure de température 26, 27 et 28, et une unité de mesure du débit de gaz généré 29;
- un actionneur sous la forme d'un vérin 30 pneumatique fixé sur l'enceinte et sur le système catalytique ;
- une vanne de commande 35 en communication fluidique d'une part avec le vérin, pour délivrer un fluide sous pression au vérin, et d'autre part avec un organe d'alimentation 40 en fluide,
- une unité de commande 45 reliée électriquement à la vanne de commande et à l'unité de mesure de pression,
- une unité de contrôle 46 reliée électriquement à l'unité de commande, et
- un module de lecture 50 relié électriquement à l'unité de commande et à l'unité de contrôle.

L'appareil comporte en outre une batterie 55 pour alimenter électriquement l'unité de commande, l'unité de contrôle, le module de lecture et la vanne de commande.

Par ailleurs, l'unité de commande peut comporter un interrupteur 60, de sorte que lorsque l'interrupteur est disposé en position d'extinction, l'unité de commande n'est pas alimentée électriquement. De préférence alors, le système catalytique est disposé en position fermée. Lorsque l'interrupteur est disposé en position d'allumage, l'unité de commande est alimentée électriquement.

L'enceinte comporte une paroi latérale 65 qui s'étend selon une direction longitudinale X, une paroi inférieure 70 définissant un fond de l'enceinte lorsque la direction longitudinale est parallèle à la direction de la gravité, et une paroi supérieure, présentant une ouverture d'évacuation du gaz. Dans une variante, l'ouverture d'évacuation peut être surmontée d'une valve, de préférence régulatrice de débit. Par ailleurs, l'ouverture d'évacuation peut être surmontée d'une valve de surpression, non représentée, pour évacuer le gaz lorsque la pression du gaz dans l'espace intérieur est supérieure à une pression seuil.

L'espace intérieur 15 peut contenir une solution aqueuse d'hydrure 80. D'autres liquides adaptés à former un gaz par mise en contact avec un catalyseur peuvent être contenus dans l'espace intérieur.

L'unité de mesure de pression 25 est disposée dans l'espace intérieur de l'enceinte. Dans l'exemple de la figure 1, elle est disposée à proximité d'une ouverture d'évacuation 85 ménagée dans la paroi supérieure de l'enceinte. D'autres dispositions sont toutefois envisageables.

Le système catalytique 20 comporte un récipient 90 disposé, de préférence fixé rigidement, sur la paroi inférieure du récipient et un couvercle 95.

Le récipient et le couvercle définissent ensemble une chambre de catalyse 100 dans laquelle est logé un catalyseur 105 de l'hydrolyse de la solution aqueuse d'hydrures.

Dans l'exemple de la figure 1, le couvercle est fermé sur le récipient et comporte un joint d'étanchéité 110 au liquide, de sorte que la chambre de catalyse est isolée de l'espace intérieur 15 du récipient. Ainsi, dans la position fermée de l'appareil de la figure 1, le liquide contenu dans l'espace intérieur ne peut pénétrer dans la chambre de catalyse.

Le catalyseur 105 est fixé sur le couvercle et se présente sous la forme d'un tube creux. Comme cela sera détaillé par la suite, d'autres dispositions du catalyseur dans le système catalytique et d'autres formes sont envisageables.

Par ailleurs, des trous 115, 120 sont ménagés respectivement dans la paroi de fond du récipient du système catalytique et dans la paroi inférieure de l'enceinte. Ils traversent de part en part les épaisseurs respectives des dites parois et sont fixés en regard l'une de l'autre. De préférence, lesdits trous 115 et 120 présentent des formes identiques.

Le vérin 30 est disposé dans lesdits trous et fixé rigidement par rapport à l'enceinte. Le vérin comporte un corps 125 cylindrique et un piston 130 logé dans le corps cylindrique et mobile par rapport au corps cylindrique. Dans l'exemple de la figure 1, le trou 115 ménagé dans la paroi inférieure de l'enceinte est taraudé et le corps cylindrique est fixé sur l'enceinte par vissage du corps cylindrique dans le trou taraudé 115. Le vérin comporte par ailleurs un organe de rappel 135 sous la forme d'un ressort hélicoïdal fixé à ses extrémités opposées sur le corps et sur le piston, qui assure une fonction de rappel. Dans une variante, le vérin peut être de type « double effet », pourvu de deux chambres alimentées chacune en fluide compressible, l'une des chambres assurant la fonction de rappel. Dans la position fermée de l'appareil illustrée sur la figure 1, le ressort est dans une position d'équilibre, dans laquelle il n'exerce pas de force de rappel sur piston.

Le vérin définit une chambre 140 de vérin pour contenir un fluide sous pression de sorte à déplacer le piston entre la position fermée illustrée sur la figure 1 et une position ouverte illustrée sur la figure 2. L'extrémité 145 du piston opposée à celle en regard de la chambre de vérin est fixée sur le couvercle. Ainsi, le couvercle est mobile en translation par rapport à l'enceinte et au récipient entre les positions ouverte et fermée.

En ce qui concerne la vanne de commande 35, elle présente une entrée 150 connectée à l'organe d'alimentation en fluide, qui dans l'exemple de la figure 1 est une cartouche 155 de fluide pneumatique sous pression, au moyen d'un tuyau d'entrée 160. La vanne de commande présente une sortie d'alimentation 165 connectée à la chambre de vérin au moyen d'un tuyau 170. Elle comporte en outre une sortie de purge 175, débouchant sur l'environnement 180 extérieur à l'appareil où la pression est inférieure à la pression dans la cartouche, de préférence où la pression est atmosphérique. La vanne est reliée électriquement par l'intermédiaire d'un câble à l'unité de commande configurée pour envoyer à la vanne de commande un signal de commande électrique Sc, et la vanne de commande est configurée pour recevoir ledit signal.

Le signal de commande peut être un signal de commande d'ouverture de la vanne de commande. Lorsque la vanne de commande reçoit un tel signal de commande d'ouverture, elle est disposée dans une configuration où la sortie de purge 175 est close, et la cartouche de fluide sous pression est mise en communication fluidique avec la chambre de vérin. Le fluide peut alors s'écouler de la cartouche à travers les entrée 150 et sortie d'alimentation 165 de la vanne de commande jusque dans la chambre de vérin, comme illustré au moyen des flèches A_{g}. Ainsi, le piston 130 peut être déplacé de la position fermée à la position ouverte, ou maintenu en position ouverte, comme illustré sur la figure 2.

Le signal de commande peut être un signal de commande de fermeture. Lorsque la vanne de commande reçoit un signal de commande de fermeture, elle est disposée dans une configuration où l'entrée 150 de la vanne de commande est close et où la sortie de purge 175 et la sortie d'alimentation 165 sont ouvertes et mises en communication fluidique. Le fluide contenu dans la chambre de vérin s'écoule dans le tuyau d'alimentation jusqu'à l'extérieur de l'appareil au travers de la sortie de purge. La pression diminuant dans la chambre de vérin, le piston se déplace alors, sous l'effet de l'effort de rappel du ressort ou d'une contre pression dans la variante où le vérin est de type « double effet », de sorte à disposer le système catalytique en position fermée.

De préférence, la vanne de commande comporte un organe électrique d'actionnement, non représenté, pour disposer la vanne dans l'une quelconque des configurations décrites aux deux paragraphes précédents, en fonction du signal électrique reçu. L'organe électrique d'actionnement est relié électriquement à la batterie.

Le signal électrique envoyé par l'unité de commande à la vanne de commande est fonction du résultat, obtenu par l'unité de commande, de la comparaison entre la pression minimale de régulation et/ou la pression maximale de régulation d'une part et la pression de gaz mesurée par l'unité de mesure de pression d'autre part.

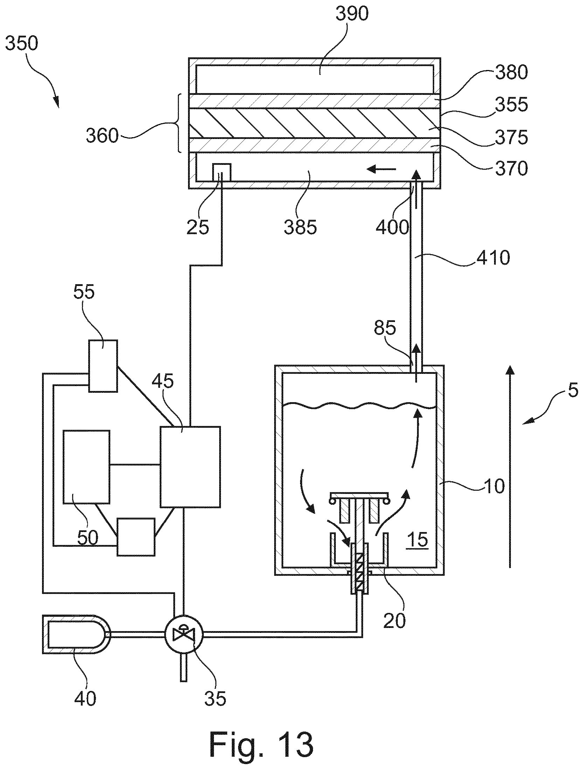

Dans l'exemple de la figure 1, l'unité de mesure de pression 25 comporte un capteur de pression 185 pour mesurer la pression de gaz dans l'enceinte. Selon un mode de pilotage de régulation mis en œuvre par l'unité de commande, l'unité de mesure de pression envoie la pression du gaz qu'elle mesure à l'unité de commande qui la reçoit et la compare aux pressions de régulation minimale et maximale. Lorsque que la pression de gaz est inférieure à la pression minimale de régulation, l'unité de commande émet un signal de commande d'ouverture à la vanne de commande de sorte à ouvrir le système de régulation. Comme illustré sur la figure 2 selon la flèche P, le liquide peut alors pénétrer dans la chambre de catalyse et entre au contact du catalyseur, si bien que par réaction entre le liquide et le catalyseur, le gaz est généré. Le gaz s'écoule alors sous l'effet de la poussée d'Archimède à travers le liquide dans l'enceinte et s'évacue à travers l'ouverture d'évacuation 85 du gaz, comme indiqué par les flèches E, par exemple vers la chambre anodique d'une pile à combustible 355 comme illustré sur la figure 13.

La génération de gaz au sein de l'enceinte résulte en une augmentation de la pression du gaz dans l'enceinte si ledit gaz n'est pas intégralement consommé, par exemple par une pile à combustible telle qu'illustrée sur la figure 13. Lorsque la pression du gaz est supérieure à la pression maximale de régulation, l'unité de commande émet un signal de commande de fermeture à la vanne de commande, de sorte à disposer le système catalytique dans la position fermée. La génération de gaz est alors arrêtée. Le gaz restant dans l'enceinte après la mise en position de l'appareil en position fermée s'évacue de l'enceinte s'il est consommé, par une pile à combustible par exemple, si bien que la pression de gaz dans l'enceinte diminue, jusqu'à devenir inférieure à la pression minimale de régulation. Selon le mode de régulation, un nouveau cycle de génération de gaz comportant l'ouverture du système catalytique telle que décrite précédemment peut alors être conduit.

Par ailleurs, le module de lecture 50 permet de régler la pression minimale et/ou la pression maximale de régulation, qui sont par exemple stockés sous la forme d'un fichier dans un média de stockage. Le module de lecture lie et envoie la valeur de la pression minimale de régulation et/ou la valeur de la pression maximale de régulation à l'unité commande qui la reçoit pour effectuer la comparaison avec la pression mesurée par l'unité de mesure de pression de gaz, préalablement à l'envoi d'un signal de commande à la vanne de commande.

En ce qui concerne l'unité de contrôle 46, bien que cela ne soit pas représenté par souci de clarté, elle est reliée électriquement aux unités de mesure de température 26, 27 et 28, à l'unité de mesure du débit de gaz généré 29, et alimentée électriquement par la batterie 55. L'unité de mesure de température 26 est disposée dans l'espace intérieur de sorte à mesurer la température du liquide 80. L'unité de mesure de température 27 est disposée dans la chambre de catalyse au contact du catalyseur 105 pour en mesurer la température. L'unité de mesure de température 28 est disposée hors de l'appareil pour mesurer la température de l'environnement de l'appareil. L'unité de mesure de débit de gaz généré 29 est disposée sur l'ouverture d'évacuation 85.

Dans l'exemple des figures 1 et 2, chacune des unités de mesure 26 à 28 est configurée pour envoyer la valeur de la température qu'elle mesure à l'unité de contrôle qui est configurée pour la recevoir et la contrôler. Selon le mode de régulation, l'unité de contrôle vérifie si la température du liquide, la température du catalyseur et la température de l'environnement de l'appareil sont inférieures à des températures de contrôle minimales respectives, durant une durée d'analyse par exemple de 5 secondes. Si tel est le cas, elle envoie un signal de pilotage Sp à l'unité de commande pour que l'unité de commande exécute un mode de pilotage à froid.

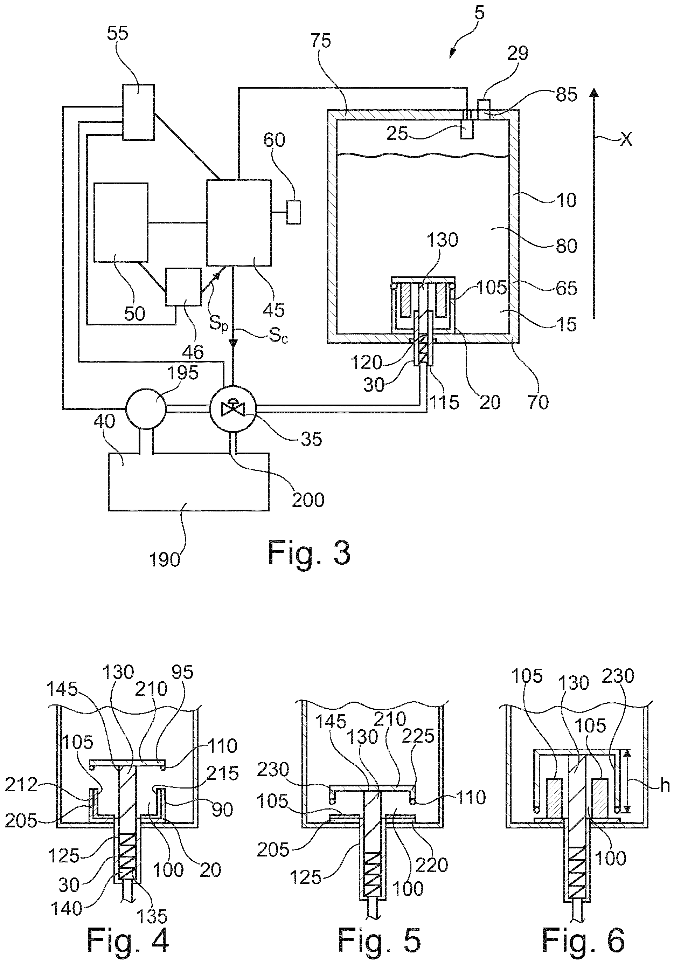

L'appareil représenté sur la figure 3 diffère de celui illustré sur les figures 1 et 2 en ce qu'il comporte en lieu et place de la cartouche de fluide un organe d'alimentation 40 en fluide comprenant un réservoir 190 pour contenir le fluide et un compresseur 195 électrique, alimenté par la batterie 55, pour comprimer le fluide provenant du réservoir et délivrer ledit fluide à la vanne de commande. Dans l'exemple de la figure 3, le fluide est un gaz et le vérin est pneumatique. Dans une variante, le fluide est un liquide, par exemple une huile et le vérin est hydraulique. Le compresseur 195 est alors remplacé par une pompe.

Par ailleurs, le réservoir comporte une ouverture d'entrée 200 en communication fluidique avec la sortie de purge de la vanne de commande. Ainsi, lorsque le vérin est purgé du fluide suite à la réception d'un signal de commande de fermeture, le fluide purgé est introduit dans le réservoir. Ainsi, l'organe d'alimentation en fluide, la vanne de commande et le vérin forment un circuit fermé pour le fluide.

Comme cela a déjà été précisé, le système catalytique comporte des première 205 et deuxième 210 pièces qui définissent ensemble une chambre de catalyse pour contenir le catalyseur. Les figures 4 à 6 illustrent différents exemples de systèmes catalytiques, ainsi que de dispositions du catalyseur au sein du système catalytique.

Le système catalytique de la figure 4 diffère de celui illustré sur la figure 1 en ce que la face intérieure 212 de la paroi latérale est recouverte d'un revêtement 215 constitué du catalyseur. Un tel système catalytique permet de limiter la quantité de catalyseur tout en présentant une surface d'échange entre le catalyseur et le liquide pour générer efficacement le gaz.

Le système catalytique de la figure 5 diffère du système catalytique de la figure 4 en ce que la première pièce 205 présente une forme d'une plaque et la deuxième pièce 210 présente une forme de cloche. La face de la première pièce en regard de la deuxième pièce est recouverte d'un revêtement 220 formé du catalyseur. La deuxième pièce présente une paroi supérieure 225 fixée au piston du vérin et une paroi latérale 230 s'étendant selon la direction longitudinale du vérin. Dans une variante, la paroi latérale peut être orientée obliquement par rapport à la direction longitudinale du vérin. Le bord de la paroi longitudinale de la deuxième pièce est surmonté d'un joint d'étanchéité 110 qui vient appuyer contre le bord de la première pièce en position fermée pour isoler le liquide du catalyseur. Le système catalytique de la figure 5 est de fabrication aisée. Notamment, le revêtement peut facilement être formé sur la plaque formant la première pièce à moindre coût. Par ailleurs, en limitant la hauteur des parois de la deuxième pièce, un système catalytique de faible encombrement peut ainsi être fabriqué.

Le système catalytique de la figure 6 diffère du système catalytique de la figure 5 en ce que la paroi latérale 230 est de hauteur h supérieure. Ainsi, la chambre de catalyse 100 du système catalytique de la figure 6 est de volume supérieur à celui illustré sur la figure 5. Un tel système est plus adapté que celui de la figure 5 dans le cas où un volume important de catalyseur est nécessaire pour mettre en œuvre la génération de gaz.

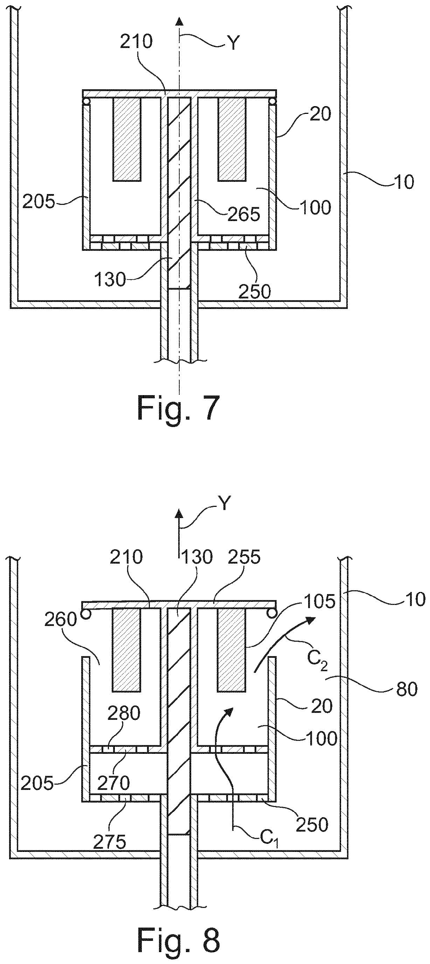

Les figures 7 et 8 illustrent une autre variante de système catalytique d'un appareil selon l'invention en position respectivement fermée et ouverte.

Le système catalytique 20 illustré sur les figures 7 et 8 diffère du système catalytique de la figure 1 en ce que la paroi inférieure 250 de la première pièce 205 est disposée à distance du récipient 10. Par ailleurs, la deuxième pièce 210 présente une paroi supérieure 255 sous une forme de plaque pour fermer l'ouverture supérieure 260 de la première pièce. Une portion tubulaire 265 fait saillie de la paroi supérieure de la deuxième pièce, dans laquelle est logé partiellement le piston 130 du vérin. De préférence, comme cela est illustré, le piston et la portion tubulaire sont de formes complémentaires. A son extrémité opposée à celle fermée par le couvercle, la deuxième pièce présente une paroi inférieure 270 s'étendant transversalement à la direction longitudinale Y du vérin.

Les parois inférieures 250, 270 des première et deuxième pièces sont percées chacune d'au moins une, de préférence de plusieurs fenêtres traversant chacune desdites parois dans son épaisseur. Les fenêtres 275, 280 des parois inférieures des première et deuxième pièces sont disposées de sorte qu'en position fermée, comme illustré sur la figure 7, lesdites parois inférieures des première et deuxième pièces forment un ensemble étanche au liquide, isolant la chambre de catalyse de l'enceinte, et en position ouverte, comme illustré sur la figure 8, définissent un chemin d'accès fluidique, représenté par la flèche C₁, entre l'espace intérieur 15 de l'enceinte et la chambre de catalyse 100 à travers lesdites parois inférieures des première et deuxième pièces. Ainsi, en position ouverte, le système catalytique définit un chemin d'accès fluidique entre la paroi supérieure de la deuxième pièce et la paroi latérale de la première pièce, illustré par la flèche C₂ et au moins un chemin d'accès entre les parois inférieures des première et deuxième pièces, illustré par la flèche C₁. La convection du liquide au sein de la chambre de catalyse est ainsi améliorée ce qui optimise le rendement de la réaction de génération de gaz. Dans l'exemple des figures 7 et 8, le passage de la position ouverte à la position fermée s'effectuer par translation de la deuxième pièce par rapport à la première pièce.

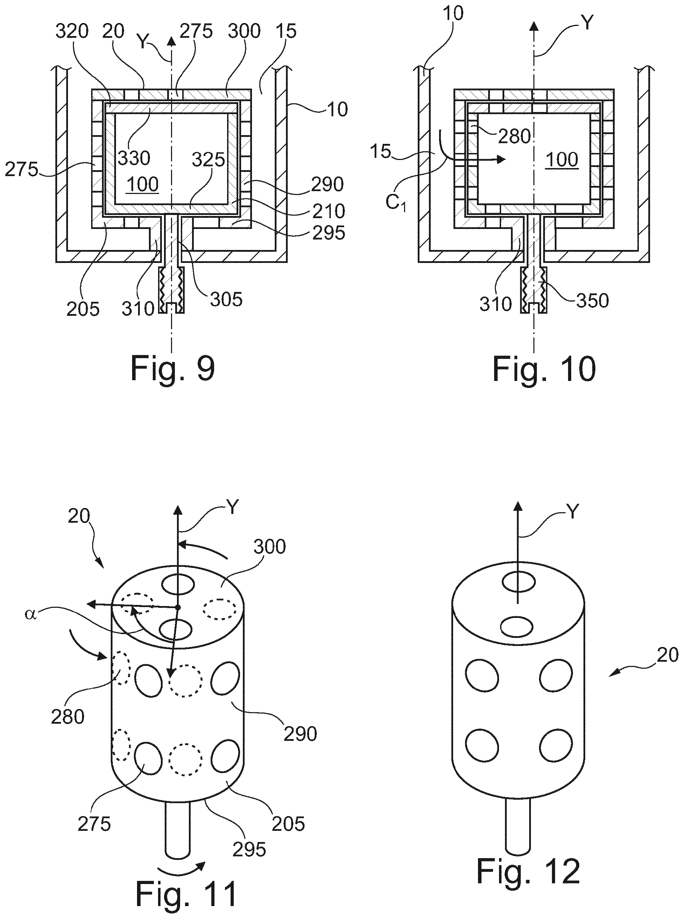

Les figures 9 à 11 illustrent une autre variante d'appareil selon l'invention dans lequel les première 205 et deuxième 210 pièces sont mobiles en rotation l'une par rapport à l'autre entre les positions ouverte et fermée autour d'un axe Y.

La première pièce présente une forme générale de portion 290 tubulaire cylindrique de révolution et creuse et présentant des extrémités opposées fermées respectivement par une paroi inférieure 295 et par une paroi supérieure 300 s'étendant selon des directions traverses à l'axe de révolution de la portion tubulaire. L'axe de révolution de la portion tubulaire cylindrique est parallèle à l'axe Y.

De préférence, la paroi supérieure 300 est amovible, et fixée, notamment par vissage, sur la portion tubulaire 290.

La paroi inférieure 295 de la première pièce présente un évidement 305 traversant la paroi inférieure dans son épaisseur et duquel fait saillie un espaceur 310. L'espaceur maintient la portion tubulaire 290 de la première pièce à distance de l'enceinte 10. L'espaceur présente une forme de tube creux et cylindrique, de préférence de révolution, coaxial à la portion tubulaire de la première pièce.

Par ailleurs, les parois inférieure, supérieure et latérale de la première pièce comportent au moins une, de préférence une pluralité de fenêtres 275 traversant chacune desdites parois dans leur épaisseur. Dans une variante, au moins une desdites parois de la première pièce peut être exempte de fenêtres.

La deuxième pièce 210 présente une forme générale de tube creux cylindrique de révolution 320 surmonté à ses extrémités opposées par une paroi inférieure 325 et une paroi supérieure 330, de préférence amovible. La deuxième pièce définit ainsi une chambre de catalyse 100 pour le catalyseur.

En outre, les parois inférieure, supérieure et latérale de la deuxième pièce comportent au moins une, de préférence une pluralité de fenêtres 280 traversant chacune desdites parois dans son épaisseur. Dans une variante, au moins une desdites parois de la deuxième pièce peut être exempte de fenêtres.

La deuxième pièce est au moins partiellement, voire intégralement reçue, dans l'espace intérieur de la portion tubulaire de la première pièce comme illustré sur la figure 9. Les première et deuxième pièces sont de formes complémentaires et sont coaxiales.

Les fenêtres des parois inférieures, latérales et supérieures des première et deuxième pièces sont disposées respectivement de sorte qu'en position fermée, comme illustré sur les figures 9 et 11, lesdites parois inférieures des première et deuxième pièces obstruent les fenêtres des deuxième et première pièces respectivement et forment un ensemble étanche au liquide, isolant la chambre de catalyse 100 de l'espace intérieur 15 de l'enceinte, et en position ouverte, comme illustré sur les figures 10 et 12, définissent un chemin d'accès fluidique, illustré par la flèche C₁ entre la chambre de catalyse et l'espace intérieur de l'enceinte à travers lesdites parois inférieures, latérales et supérieures des première et deuxième pièces. Sur la figure 11, les fenêtres de la deuxième pièce sont représentées en pointillés, pour indiquer leur position angulaire relative aux fenêtres de la première pièce.

Le passage de la position fermée à la position ouverte s'effectue par rotation d'un angle α de la deuxième pièce par rapport à la première pièce autour de l'axe Y. A cette fin, la deuxième pièce est fixée sur un arbre d'un moteur 350 pas à pas, engagé dans l'espaceur. Le moteur pas à pas comporte un stator et un rotor mobiles en rotation l'un par rapport à l'autre autour de l'axe Y. Le moteur pas à pas est alimenté électriquement par la batterie et relié à l'unité de commande. Il est configuré pour entrainer la deuxième pièce relativement à la première pièce en position ouverte ou en position fermée en réception d'un signal provenant de l'unité de commande.

La figure 13 illustre un dispositif 350 selon l'invention, comportant une pile à combustible 355 alimentée en dihydrogène par un appareil 5 selon l'invention.

La pile à combustible comporte une unité d'oxydation 360 incluant un empilement formé d'une anode 370, d'une membrane électrolytique 375 et d'une cathode 380. Elle définit par ailleurs une chambre anodique 385 pour distribuer le dihydrogène à l'anode, et une chambre cathodique 390, pour distribuer du dioxygène à la cathode.

La chambre anodique comporte par ailleurs un orifice d'entrée 400 pour l'alimentation en dihydrogène, relié à l'ouverture d'évacuation 85 de l'appareil au moyen d'un tube creux de transport 410.

L'appareil illustré sur la figure 13 est identique à celui décrit sur la figure 1, à ceci près que l'unité de mesure de pression 25 est disposée dans la chambre anodique 385 de la pile à combustible. Dans une autre variante non représentée, l'unité de mesure de pression 25 peut être disposée dans le tube creux 410.

Ainsi, en fonctionnement, la génération de dihydrogène par l'appareil est adaptée en fonction du besoin en dihydrogène de la pile à combustible.

En ce qui concerne le procédé selon l'invention, il comporte au moins un, de préférence plusieurs cycles formés des étapes a) à c).

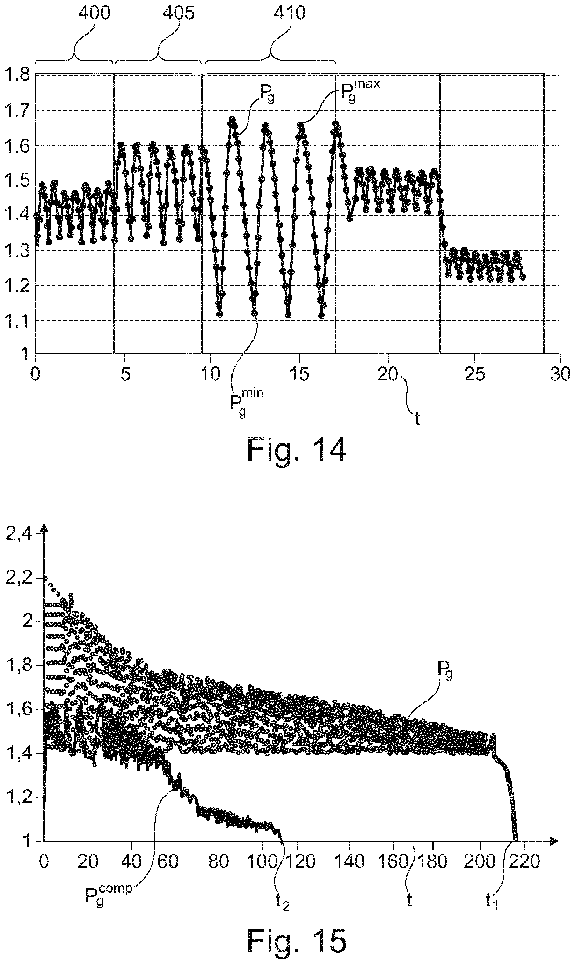

La figure 14 illustre l'évolution de la pression du gaz P_{g} au sein d'une enceinte d'un appareil selon l'invention, tel que notamment décrit sur les figures 1 et 2, en fonction du temps t de mise en œuvre du procédé. Comme cela peut être observé, la pression du gaz évolue entre des valeurs minimale P_{g}^{min} et maximale P_{g}^{max}, qui correspondent aux pressions minimale et maximale de régulation respectivement. Par exemple, au cours de la première période 400 de mise en œuvre du procédé (entre t=0 et t=4), la pression minimale de régulation est égale à 1,3 bar et la pression maximale de régulation est égale à 1,5 bar. A compter de t=4, dans une deuxième période 405 de mise en œuvre du procédé, l'utilisateur modifie la pression maximale de régulation au moyen de l'unité de réglage à une valeur de 1,6 bar. A compter de t=9, dans une troisième période 410 de mise en œuvre du procédé, les pressions maximale et minimale de régulation sont modifiées simultanément, respectivement augmentée à 1,7 bar et abaissée à 1,1 bar. Ainsi, la pression moyenne au cours des première 400 et troisième 405 périodes est identique, égale à 1,4 bar. Par exemple, pour une pression moyenne identique, une augmentation de la pression de régulation maximale et une diminution de la pression de régulation minimale résulte en une diminution du nombre de cycles d'ouverture/fermeture du système catalytique, ce qui réduit la consommation en fluide compressible et en énergie pour générer le gaz. Une réduction de l'amplitude autour de la pression moyenne, par diminution de la pression de régulation maximale et augmentation de la pression de régulation minimale permet de mieux s'adapter aux exigences de fonctionnement d'une pile à combustible. Elle permet en outre à l'appareil de génération de gaz de répondre plus rapidement et aisément à des pics de débit de consigne imposés par une pile à combustible à laquelle l'appareil est relié. Le réglage des pressions minimale et maximale de régulation permet ainsi à l'utilisateur du dispositif d'adapter la génération de gaz aux spécificités de l'application à laquelle le gaz est destiné.

### Exemples

L'invention est illustrée au moyen des exemples non limitatifs suivants.

### Exemple 1

On réalise une génération de gaz au moyen d'un appareil tel qu'illustré sur la figure 1. A cette fin, le système catalytique comporte, au sein de la chambre de catalyse, 1 gramme de cobalt et l'espace intérieur de l'enceinte, d'une contenance de 0,6 1, contient 0,5 1 d'une solution de borohydrure de sodium. Les températures initiales du catalyseur et de la solution liquide sont toutes deux égales à 25°C.

L'appareil est relié à une pile à combustible qu'il alimente en dihydrogène généré.

La pression de régulation minimale est fixée à 1,4 bar, et la pression maximale de régulation est fixée à 1,5 bar.

La figure 15 illustre l'évolution de la pression de gaz P_{g} dans l'enceinte en fonction du temps t de mise en œuvre du procédé.

A l'instant t₀=0, le système catalytique est disposé en position ouverte. La génération de gaz commence et le débit de consigne de gaz généré est atteint (valeur de 1000 ml/min) dès le premier cycle de mise en œuvre du procédé. Comme cela est observé sur la figure 15, la pression de gaz Pg dans l'enceinte est, dans les premiers instants de la génération de dihydrogène, supérieure à 2 bars alors que la pression de régulation maximale est de 1,5 bar. Ce phénomène est expliqué par les inventeurs, comme résultant d'un volume de la chambre catalytique non optimisé, trop important par rapport au volume du catalyseur. Au cours du temps, la teneur en hydrures de la solution décroit, si bien que le volume de solution emprisonné dans la chambre de catalyse lors de chaque fermeture entraîne une génération de gaz de moins en moins importante. La consommation en gaz par la pile à combustible étant constante, la pression de gaz dans l'enceinte dépasse ainsi de moins en moins souvent la pression maximale de régulation imposée. La génération de gaz se poursuit ainsi jusqu'à ce que la quantité instantanée de gaz généré soit inférieure à la quantité instantanée de gaz consommé par la pile à combustible à laquelle l'appareil est relié (instant t₁=220 min), comme cela est observé sur la figure 15.

Ainsi, le rendement massique en hydrogène, défini comme le rapport entre la masse d'hydrogène générée et la masse totale de solution du procédé selon l'invention est de 3,6%.

### Exemple comparatif

On réalise une génération de gaz au moyen de l'enceinte du dispositif de l'appareil illustré sur la figure 1. Le système catalytique, sous forme d'une bouée décrite dans WO 2012/003112 A1 est utilisé en lieu et place du système catalytique selon l'invention. De mêmes quantités de cobalt et de solution de borohydrure de sodium que dans l'exemple 1 sont utilisées.

La figure 15 illustre l'évolution de la pression de gaz P_{g}^{comp} dans l'enceinte en fonction du temps t de mise en œuvre du procédé.

A l'instant t₀=0, le système catalytique est disposé en position ouverte. La génération de gaz commence et le débit de consigne de gaz généré est immédiatement atteint (valeur de 1000 ml/min).

La génération de gaz au débit de consigne se poursuit ainsi jusqu'à ce que la pression dans l'enceinte atteigne 1 bar à t₂=110 min. A partir de cet instant, la pression dans l'enceinte devient égale à la pression atmosphérique. L'appareil de l'art antérieur ne peut plus produire du gaz dans une quantité suffisante pour assurer le débit de consigne, la concentration en réactifs étant trop faible vis-à-vis de l'accessibilité du catalyseur.

Ainsi, le rendement massique du procédé de l'art antérieur est de 1,8%.

### Exemple 3

On dispose d'un dispositif tel que décrit sur la figure 13, à ceci près que l'unité de mesure de pression 25 est disposée pour mesurer la pression de gaz dans l'espace intérieur comme illustré sur la figure 1. Le procédé est mis en œuvre dans les conditions suivantes. Le débit de consigne souhaité, régulé par une valve de régulation de débit fixée sur l'ouverture d'évacuation de l'appareil (non représentée), est fixé à 160 ml/min. Cette valve de régulation de débit permet de simuler la consommation en gaz d'une pile à combustible. L'appareil est disposé dans une enceinte climatique dont la température est de -8°C. Préalablement à l'ouverture du système catalytique, la température de la solution d'hydrure est de -1°C et la température du catalyseur est de 0°C.

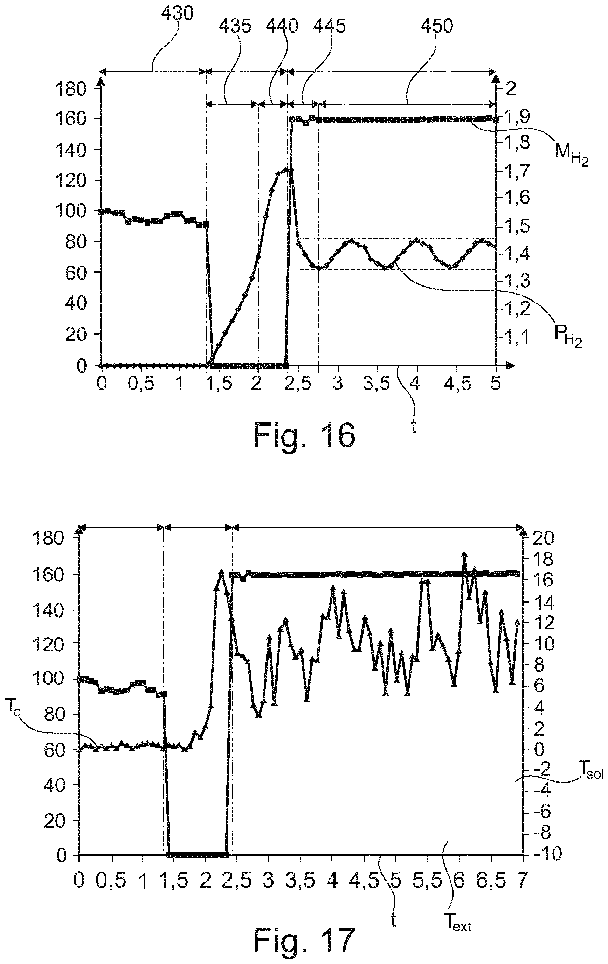

L'évolution des températures du catalyseur T_{c}, de la solution aqueuse d'hydrure Tₛₒₗ contenue dans l'enceinte, de l'environnement extérieur à l'appareil Tₑₓₜ, ainsi que du débit de dihydrogène M_{H2} et la pression de dihydrogène P_{g} dans l'enceinte en fonction du temps de mise en œuvre du procédé sont représentés sur les figures 16 et 17.

A t₀=0, l'appareil est piloté de sorte que l'unité de commande exécute un mode de pilotage en régulation tel que décrit précédemment. Le système catalytique est ouvert suite à l'envoi d'une commande d'ouverture du piston à la vanne de commande, la pression de gaz étant initialement inférieure à la pression minimale de régulation. La température du catalyseur et de la solution aqueuse d'hydrure étant toutes deux inférieures à 5°C, la réaction d'hydrolyse catalysée présente une cinétique lente, si bien que le débit de dihydrogène généré est d'environ 100 ml/min, inférieur au débit de consigne, tout au long d'une première période 430, jusqu'à t=1,4 min.

Durant la période 430, l'unité de contrôle analyse, en tant que grandeurs de contrôle, le débit de dihydrogène généré M_{H2} et la température du catalyseur Tc.

A t=1,4 min, l'unité de de contrôle émet comme résultat de l'analyse que le débit est inférieur à un débit de consigne fixé à 160 ml/min, et que la température du liquide est inférieure à une température de consigne fixée à 0°C. Elle émet alors un signal de pilotage à destination de l'unité de commande pour la mise en œuvre d'un mode de pilotage à froid. Suite à la réception du signal de pilotage, l'unité de commande exécute le mode de pilotage à froid en envoyant d'abord un signal de commande de fermeture à la vanne de commande pour disposer le système catalytique en position fermée. Optionnellement, elle peut envoyer à la vanne régulatrice de débit un signal pour fermer l'ouverture d'évacuation pour empêcher l'évacuation du dihydrogène hors de l'enceinte. En variante, un signal peut être envoyé à la pile à combustible pour que cette dernière soit mise en pause durant l'exécution du mode de pilotage à froid. Le signal de commande de fermeture est maintenu tout au long des périodes référencées 435 et 440. Un volume de solution aqueuse d'hydrure est ainsi contenu dans la chambre de catalyse, isolé de l'espace intérieur de l'enceinte. Ce volume de solution aqueuse d'hydrure réagit au contact du catalyseur, ce qui engendre une génération de dihydrogène qui est évacuée hors de la chambre catalytique dans l'espace intérieur. La pression de dihydrogène augmente dans l'enceinte. L'hydrolyse de la solution aqueuse d'hydrure étant exothermique, la température du catalyseur augmente conséquemment au cours des périodes 435 et 440 jusqu'à environ 16°C. Au cours des périodes 435 et 440, selon le mode de pilotage à froid, l'unité de contrôle reçoit et analyse la pression de gaz générée et, optionnellement la température du catalyseur, en tant que grandeurs à contrôler. En fin de période 440, la pression de gaz généré est supérieure à un paramètre de contrôle étant la pression de régulation maximale du mode de régulation, fixée à 1,5 bar. L'unité de commande envoie alors un signal de commande d'ouverture de l'enceinte, au début de la période 445 afin que le dihydrogène en soit évacué et soit, par exemple, consommé par une pile à combustible PAC, diminuant ainsi la pression de dihydrogène dans l'enceinte. L'unité de commande peut envoyer, en fin de période 445, un signal de commande pour disposer le système catalytique en position ouverte, comme cela est détaillé ci-dessous. Par exemple, l'émission du signal de commande d'ouverture de l'enceinte peut résulter de la réception d'un signal en provenance de la pile à combustible. Au cours de la période 445, la pression de gaz diminue, la valve de régulation de débit étant ouverte permettant au gaz de s'échapper de l'enceinte. L'unité de commande analyse alors la pression de gaz et la compare à un deuxième paramètre de contrôle qui est par exemple inférieur à la pression minimale du mode de régulation. Par exemple, le deuxième paramètre de contrôle est la pression atmosphérique. Dans le cas où la pression de gaz dans l'enceinte devient inférieure au deuxième paramètre de contrôle, l'unité de commande envoie un signal de commande de fermeture qui est maintenu comme au cours des périodes 435 et 440, de sorte à réchauffer une nouvelle fois le catalyseur. Dans le cas contraire, si la pression augmente après avoir atteint la valeur minimale de régulation, suite à la décomposition des hydrures de la solution au contact du catalyseur, l'unité de contrôle émet un signal de pilotage en mode de régulation. L'unité de commande cesse l'exécution du mode de pilotage à froid, comme cela est observé au cours de la période 450.

Lorsque la pression de dihydrogène dans l'enceinte devient inférieure à la pression minimale de régulation, à partir de t=2,75 min, au cours de la période 450, l'unité de commande envoie un signal de commande d'ouverture à la vanne de commande. La température du catalyseur ayant augmenté par rapport à la première période, l'atteinte du débit de consigne est immédiate et plusieurs cycles d'ouverture/fermeture du système catalytique selon le mode de pilotage de régulation sont alors mis en œuvre.

Comme cela apparait clairement de la présente description, la génération de gaz, notamment de dihydrogène, au moyen de l'appareil selon l'invention peut aisément être adaptée en fonction de l'application à laquelle le gaz généré est destiné. En particulier, elle permet d'initier une génération de dihydrogène de manière efficace, fiable dans un environnement où la température est inférieure à 0°C, et permet d'adapter le profil de pression de gaz généré à l'application.

Bien entendu, l'invention n'est pas limitée aux modes de réalisation de l'appareil et du dispositif selon les modes de mise en œuvre du procédé décrits et représentés.

## Revendications

1. Appareil (5) utile pour générer un gaz, l'appareil comportant :
- une enceinte (10) définissant un espace intérieur (15) pour contenir un liquide (80) apte à générer le gaz par mise en contact avec un catalyseur (105),
- un système catalytique (20) comportant des première (205) et deuxième (210) pièces qui définissent ensemble une chambre de catalyse (100) pour contenir le catalyseur,
les première et deuxième pièces étant mobiles l'une par rapport à l'autre, de préférence en translation et/ou en rotation, entre une position fermée dans laquelle la chambre de catalyse est isolée de l'espace intérieur, et une position ouverte dans laquelle la chambre de catalyse est en communication fluidique avec l'espace intérieur,
de telle sorte que lorsque le liquide et le catalyseur sont contenus respectivement dans l'espace intérieur et dans la chambre de catalyse, en position ouverte, le liquide pénètre dans la chambre de catalyse et le gaz est généré par mise en contact du liquide avec le catalyseur,
- un actionneur relié au système catalytique et configuré pour disposer le système catalytique dans la position ouverte et/ou dans la position fermée, et
- une unité de commande pour commander l'actionneur.

2. Appareil selon la revendication 1, dans lequel l'actionneur est un vérin hydraulique ou un vérin électrique ou un vérin pneumatique ou un moteur électrique.

3. Appareil selon la revendication 2, dans lequel, dans au moins l'une des positions ouverte et fermée du système catalytique, au moins une partie du vérin est disposée dans le logement et/ou le système catalytique est disposé dans l'espace intérieur de l'enceinte.

4. Appareil selon l'une quelconque des revendications 2 et 3, dans lequel le vérin est hydraulique ou de préférence pneumatique, l'appareil comportant une vanne de commande (35) reliée à l'unité de commande et au vérin, la vanne de commande étant configurée pour recevoir un signal de commande en provenance de l'unité de commande et pour délivrer une quantité de fluide sous pression au vérin et/ou pour purger le vérin dudit fluide, suite à la réception dudit signal de commande,
l'appareil comportant de préférence un organe d'alimentation (40) en fluide sous pression en communication fluidique avec la vanne de commande, de préférence choisi parmi une cartouche (155) comportant le fluide pneumatique sous pression, la cartouche étant de préférence reliée de manière amovible à la vanne de commande, et un ensemble formé d'un réservoir (190) comportant le fluide pneumatique lié à un compresseur (195) ou à une pompe pour comprimer le fluide.

5. Appareil selon l'une quelconque des revendications précédentes, dans lequel l'unité de commande est configurée pour commander l'actionneur selon au moins un mode de pilotage paramétré au moyen d'au moins un paramètre de pilotage,
le mode de pilotage étant de préférence un mode de régulation paramétré au moyen de paramètres de pilotage comportant des premier et deuxième paramètres de régulation, et l'unité de commande étant configurée pour recevoir une grandeur à réguler, de préférence la pression du gaz, et pour commander l'actionneur de sorte à disposer le système catalytique selon une première position et une deuxième position, par exemple selon une position ouverte et une position fermée respectivement, lorsque la grandeur à réguler est inférieure au premier paramètre de régulation, de préférence à une pression minimale de régulation, et respectivement supérieure au deuxième paramètre de régulation, de préférence à une pression maximale de régulation.

6. Appareil selon la revendication 5, comportant une unité de contrôle configurée pour :
- recevoir au moins une grandeur à contrôler,
- analyser la grandeur à contrôler, notamment par comparaison de la grandeur à contrôler avec au moins un paramètre de contrôle, et
en fonction du résultat de l'analyse :
- générer un signal de pilotage selon le mode de régulation ou un mode de pilotage spécifique différent du mode de régulation, et
- envoyer le signal de pilotage à l'unité de commande qui est configurée pour recevoir ledit signal de pilotage et commander l'actionneur selon le mode de pilotage correspondant au signal de pilotage.

7. Appareil selon l'une quelconque des revendications précédentes, comportant une unité de mesure d'une grandeur choisie parmi la pression de gaz dans l'espace intérieur, la pression du gaz dans une machine, de préférence une pile à combustible, avec laquelle l'appareil est en communication fluidique, le débit de gaz généré et une température, par exemple la température du liquide ou la température du catalyseur ou la température de l'environnement de l'appareil, l'unité de mesure étant configurée pour envoyer la grandeur mesurée à l'unité de commande et/ou à l'unité de contrôle,
de préférence en fonction du mode de pilotage à mettre en œuvre par l'unité de commande, la grandeur mesurée par l'unité de mesure est une grandeur à réguler et/ou une grandeur à contrôler.

8. Appareil selon l'une quelconque des revendications précédentes, comportant le catalyseur, au moins une portion du catalyseur étant fixée sur la première pièce et/ou sur la deuxième pièce, et/ou l'espace intérieur contient le liquide.

9. Appareil selon l'une quelconque des revendications précédentes, dans lequel une paroi (250;270) de la première pièce, respectivement de la deuxième pièce, comporte au moins une fenêtre (275;280) traversant ladite paroi dans son épaisseur, la fenêtre de la première pièce, respectivement de la deuxième pièce, étant intégralement obturée par la deuxième pièce, respectivement par la première pièce dans la position fermée du système catalytique, et les fenêtres des première et deuxième pièces définissent un chemin d'accès au liquide à travers les parois des première et deuxième pièces vers la chambre de catalyse dans la position ouverte du système catalytique.

10. Procédé de génération d'un gaz, de préférence du dihydrogène, dans lequel on dispose d'un appareil (5) selon l'une quelconque des revendications précédentes, l'espace intérieur (15) de l'enceinte (10) contenant un liquide (80), de préférence une solution aqueuse d'hydrure, apte à générer le gaz par contact avec un catalyseur (105) et la chambre de catalyse (100) du système catalytique contenant ledit catalyseur, de préférence choisi parmi le platine, le cobalt, le ruthénium, le nickel et leurs alliages, le procédé étant mis en œuvre selon un mode pilotage paramétré au moyen de premier et deuxième paramètres de régulation, dit mode de régulation, le procédé comportant les étapes consistant à mesurer une grandeur à réguler et à commander l'actionneur pour disposer le système catalytique selon des première et deuxième positions, de préférence selon des positions ouverte et fermée respectivement, lorsque la grandeur à réguler est inférieure, respectivement supérieure au premier paramètre de régulation, respectivement au deuxième paramètre de régulation.

11. Procédé selon la revendication précédente, dans lequel la grandeur à réguler est choisie parmi la pression de gaz dans l'espace intérieur, la pression du gaz dans une machine avec laquelle l'appareil, de préférence une pile à combustible, est en communication fluidique, le débit de gaz généré et une température, par exemple la température du liquide ou la température du catalyseur ou la température de l'environnement de l'appareil, et les premier et deuxième paramètres de régulation sont des valeurs respectivement minimale et maximale de la grandeur à réguler,
la grandeur à réguler étant de préférence la pression de gaz dans l'espace intérieur, et les premier et deuxième paramètres de régulation étant respectivement des pressions minimales de régulation et pression maximale de régulation.

12. Procédé selon l'une des revendications 10 et 11, dans lequel :
- on mesure au moins une, de préférence plusieurs grandeurs à contrôler,
- on analyse la grandeur à contrôler, notamment en la comparant avec au moins un paramètre de contrôle, et
en fonction du résultat de l'analyse,
- on cesse de piloter le procédé selon le mode de régulation puis on pilote le procédé selon un mode de pilotage spécifique différent du mode de régulation.

13. Procédé selon la revendication précédente, dans lequel :
- les grandeurs à contrôler sont la température du liquide et/ou la température de l'environnement de l'appareil et/ou la température du catalyseur, et les paramètres de contrôle sont respectivement une température de contrôle minimale du liquide et/ou une température de contrôle minimale d'environnement et/ou une température de contrôle minimale du catalyseur,
- on procède à l'analyse consistant à vérifier si pendant une durée d'analyse, de préférence comprise entre 0,1 et 10 secondes, la température du liquide et/ou la température de l'environnement de l'appareil et/ou la température du catalyseur sont respectivement inférieures à la température de contrôle minimale du liquide et/ou une température de contrôle minimale d'environnement et/ou à la température de contrôle minimale du catalyseur, et si tel est le cas,
- on cesse de piloter le procédé selon le mode de régulation puis on pilote le procédé selon un mode de pilotage à froid dans lequel la grandeur à contrôler est la pression du gaz dans l'enceinte, et:
i) optionnellement, on commande l'actionneur de sorte à disposer le système catalytique en position ouverte, de préférence pendant une durée comprise entre 1 secondes et 10 secondes, puis
ii) on commande l'actionneur de sorte à disposer et maintenir le système catalytique en position fermée tant que la pression du gaz dans l'enceinte est inférieure à une pression maximale de consigne qui est de préférence supérieure ou égale à la pression maximale de régulation,
iii) on commande l'actionneur de sorte à disposer et maintenir le système catalytique en position ouverte et on ouvre l'enceinte de sorte que le gaz généré s'évacue de l'enceinte, et
- si au cours de l'étape iii) la pression de gaz mesurée devient inférieure puis supérieure à une pression minimale de consigne, qui est de préférence inférieure ou égale à la pression minimale de régulation, on cesse de piloter le procédé selon le mode de pilotage à froid et, de préférence on pilote le procédé selon le mode de régulation,
- sinon on effectue les étapes i) et ii).

14. Procédé selon la revendication précédente, dans lequel la température de contrôle minimale du liquide et/ou la température de contrôle minimale d'environnement et/ou la température de contrôle minimale du catalyseur sont égales à 5°C, voire égales à 0°C.

15. Dispositif (350) de production d'énergie électrique, le dispositif comportant
- une pile à combustible (355) configurée pour générer un courant électrique par oxydation d'un gaz, et
- un appareil (5) de génération de gaz selon l'une quelconque des revendications 1 à 9, en communication de fluide avec la pile à combustible et configuré pour alimenter la pile à combustible en ledit gaz.

## Patentansprüche

1. Vorrichtung (5) zum Erzeugen eines Gases, wobei die Vorrichtung aufweist:
- ein Gehäuse (10), das einen inneren Raum (15) zur Aufnahme einer Flüssigkeit (80) definiert, die geeignet ist, das Gas durch Inkontaktbringen mit einem Katalysator (105) zu erzeugen,
- ein katalytisches System (20), das ein erstes (205) und ein zweites (210) Teil aufweist, welche zusammen eine Katalysekammer (100) zur Aufnahme des Katalysators definieren,
wobei das erste und das zweite Teil relativ zueinander beweglich sind, vorzugsweise translatorisch und/oder rotatorisch, zwischen einer geschlossenen Position, in welcher die Katalysekammer von dem inneren Raum isoliert ist, und einer offenen Position, in welcher die Katalysekammer mit dem inneren Raum in Fluidverbindung steht,
derart, dass, wenn die Flüssigkeit und der Katalysator im inneren Raum bzw. in der Katalysekammer enthalten sind, in der offenen Position die Flüssigkeit in die Katalysekammer eindringt und das Gas durch Inkontaktbringen der Flüssigkeit mit dem Katalysator erzeugt wird,
- einen Aktuator, der mit dem katalytischen System verbunden ist und dafür ausgelegt ist, das katalytische System in der offenen Position und/oder in der geschlossenen Position anzuordnen, und
- eine Steuereinheit zum Steuern des Aktuators.

2. Vorrichtung nach Anspruch 1, wobei der Aktuator ein hydraulischer Stellantrieb oder ein elektrischer Stellantrieb oder ein pneumatischer Stellantrieb oder ein Elektromotor ist.

3. Vorrichtung nach Anspruch 2, wobei in wenigstens einer von der offenen und der geschlossenen Position des katalytischen Systems wenigstens ein Teil des Stellantriebs in der Aufnahme angeordnet ist und/oder das katalytische System in dem inneren Raum des Gehäuses angeordnet ist.

4. Vorrichtung nach einem der Ansprüche 2 und 3, wobei der Stellantrieb hydraulisch oder vorzugsweise pneumatisch ist, wobei die Vorrichtung ein Steuerventil (35) aufweist, das mit der Steuereinheit und mit dem Stellantrieb verbunden ist, wobei das Steuerventil dafür ausgelegt ist, von der Steuereinheit ein Steuersignal zu empfangen und im Anschluss an den Empfang des Steuersignals dem Stellantrieb eine Fluidmenge unter Druck zuzuführen und/oder den Stellantrieb von dem Fluid zu entleeren,
wobei die Vorrichtung vorzugsweise ein mit dem Steuerventil in Fluidverbindung stehendes Organ zur Versorgung (40) mit Fluid unter Druck aufweist, das vorzugsweise ausgewählt ist aus einer das unter Druck stehende pneumatische Fluid enthaltenden Patrone (155), wobei die Patrone vorzugsweise lösbar mit dem Steuerventil verbunden ist, und einer Anordnung, die von einem das pneumatische Fluid enthaltenden Behälter (190) gebildet wird, der mit einem Kompressor (195) oder mit einer Pumpe zum Komprimieren des Fluids verbunden ist.

5. Vorrichtung nach einem der vorhergehenden Ansprüche, wobei die Steuereinheit dafür ausgelegt ist, den Aktuator gemäß wenigstens einem Vorsteuermodus zu steuern, der mittels wenigstens eines Vorsteuerparameters parametriert ist,
wobei der Vorsteuermodus vorzugsweise ein Regelmodus ist, der mithilfe von Vorsteuerparametern parametriert ist, die einen ersten und einen zweiten Regelparameter umfassen, und wobei die Steuereinheit dafür ausgelegt ist, eine zu regelnde Größe zu empfangen, vorzugsweise den Druck des Gases, und den Aktuator so zu steuern, dass das katalytische System gemäß einer ersten Position und einer zweiten Position angeordnet wird, zum Beispiel gemäß einer offenen Position bzw. einer geschlossenen Position, wenn die zu regelnde Größe kleiner als der erste Regelparameter ist, vorzugsweise als ein minimaler Regeldruck, bzw. größer als der zweite Regelparameter ist, vorzugsweise als ein maximaler Regeldruck.

6. Vorrichtung nach Anspruch 5, welche eine Kontrolleinheit aufweist, die dafür ausgelegt ist:
- wenigstens eine zu kontrollierende Größe zu empfangen,
- die zu kontrollierende Größe zu analysieren, insbesondere durch Vergleich der zu kontrollierenden Größe mit wenigstens einem Kontrollparameter, und
in Abhängigkeit vom Ergebnis der Analyse:
- ein Vorsteuersignal gemäß dem Regelmodus oder einem speziellen Vorsteuermodus, der von dem Regelmodus verschieden ist, zu erzeugen, und
- das Vorsteuersignal an die Steuereinheit zu senden, welche dafür ausgelegt ist, das Vorsteuersignal zu empfangen und den Aktuator gemäß dem Vorsteuermodus zu steuern, der dem Vorsteuersignal entspricht.

7. Vorrichtung nach einem der vorhergehenden Ansprüche, welche eine Messeinheit für eine Größe aufweist, die aus dem Gasdruck im inneren Raum, dem Druck des Gases in einer Maschine, vorzugsweise einer Brennstoffzelle, mit welcher die Vorrichtung in Fluidverbindung steht, dem Durchsatz des erzeugten Gases und einer Temperatur, zum Beispiel der Temperatur der Flüssigkeit oder der Temperatur des Katalysators oder der Temperatur der Umgebung der Vorrichtung, ausgewählt ist, wobei die Messeinheit dafür ausgelegt ist, die gemessene Größe an die Steuereinheit und/oder an die Kontrolleinheit zu senden,
vorzugsweise in Abhängigkeit von dem Vorsteuermodus, der von der Steuereinheit anzuwenden ist, wobei die von der Messeinheit gemessene Größe eine zu regelnde Größe und/oder eine zu kontrollierende Größe ist.

8. Vorrichtung nach einem der vorhergehenden Ansprüche, welche den Katalysator aufweist, wobei wenigstens ein Abschnitt des Katalysators an dem ersten Teil und/oder an dem zweiten Teil befestigt ist, und/oder der innere Raum die Flüssigkeit enthält.

9. Vorrichtung nach einem der vorhergehenden Ansprüche, wobei eine Wand (250; 270) des ersten Teils bzw. des zweiten Teils wenigstens ein Fenster (275; 280) aufweist, das die Wand in ihrer Dicke durchquert, wobei das Fenster des ersten Teils bzw. des zweiten Teils in der geschlossenen Position des katalytischen Systems vollständig durch das zweite Teil bzw. durch das erste Teil verschlossen wird und die Fenster des ersten und des zweiten Teils in der offenen Position des katalytischen Systems einen Zugangsweg für die Flüssigkeit durch die Wände des ersten und des zweiten Teils hindurch zur Katalysekammer definieren.

10. Verfahren zur Erzeugung eines Gases, vorzugsweise von Diwasserstoff, wobei eine Vorrichtung (5) nach einem der vorhergehenden Ansprüche bereitgestellt wird, wobei der innere Raum (15) des Gehäuses (10) eine Flüssigkeit (80) enthält, vorzugsweise eine wässrige Lösung eines Hydrids, die geeignet ist, das Gas durch Kontakt mit einem Katalysator (105) zu erzeugen, und wobei die Katalysekammer (100) des katalytischen Systems den Katalysator enthält, der vorzugsweise aus Platin, Cobalt, Ruthenium, Nickel und deren Legierungen ausgewählt ist, wobei das Verfahren gemäß einem Vorsteuermodus durchgeführt wird, der mittels eines ersten und eines zweiten Regelparameters parametriert ist, Regelmodus genannt, wobei das Verfahren die Schritte umfasst, die darin bestehen, eine zu regelnde Größe zu messen und den Aktuator zu steuern, um das katalytische System gemäß einer ersten und einer zweiten Position anzuordnen, vorzugsweise gemäß einer offenen bzw. einer geschlossenen Position, wenn die zu regelnde Größe kleiner bzw. größer als der erste Regelparameter bzw. als der zweite Regelparameter ist.

11. Verfahren nach dem vorhergehenden Anspruch, wobei die zu regelnde Größe aus dem Gasdruck im inneren Raum, dem Druck des Gases in einer Maschine mit welcher die Vorrichtung, vorzugsweise einer Brennstoffzelle, in Fluidverbindung steht, dem Durchsatz des erzeugten Gases und einer Temperatur, zum Beispiel der Temperatur der Flüssigkeit oder der Temperatur des Katalysators oder der Temperatur der Umgebung der Vorrichtung, ausgewählt ist, und wobei der erste und der zweite Regelparameter ein minimaler bzw. maximaler Wert der zu regelnden Größe sind,
wobei die zu regelnde Größe vorzugsweise der Gasdruck im inneren Raum ist und der erste und der zweite Regelparameter ein minimaler Regeldruck bzw. maximaler Regeldruck sind.

12. Verfahren nach einem der Ansprüche 10 und 11, wobei:
- wenigstens eine zu kontrollierende Größe gemessen wird, vorzugsweise mehrere,
- die zu kontrollierende Größe analysiert wird, insbesondere indem sie mit wenigstens einem Kontrollparameter verglichen wird, und,
in Abhängigkeit vom Ergebnis der Analyse,
- aufgehört wird, das Verfahren gemäß dem Regelmodus vorzusteuern, und danach das Verfahren gemäß einem speziellen Vorsteuermodus vorgesteuert wird, der von dem Regelmodus verschieden ist.

13. Verfahren nach dem vorhergehenden Anspruch, wobei:
- die zu kontrollierenden Größen die Temperatur der Flüssigkeit und/oder die Temperatur der Umgebung der Vorrichtung und/oder die Temperatur des Katalysators sind und die Kontrollparameter entsprechend eine minimale Kontrolltemperatur der Flüssigkeit und/oder eine minimale Kontrolltemperatur der Umgebung und/oder eine minimale Kontrolltemperatur des Katalysators sind,
- die Analyse durchgeführt wird, die darin besteht zu überprüfen, ob während einer Analysedauer, die vorzugsweise zwischen 0,1 und 10 Sekunden liegt, die Temperatur der Flüssigkeit und/oder die Temperatur der Umgebung der Vorrichtung und/oder die Temperatur des Katalysators entsprechend kleiner als die minimale Kontrolltemperatur der Flüssigkeit und/oder eine minimale Kontrolltemperatur der Umgebung und/oder als die minimale Kontrolltemperatur des Katalysators sind, und wenn dies der Fall ist,
- aufgehört wird, das Verfahren gemäß dem Regelmodus vorzusteuern, und danach das Verfahren gemäß einem Vorsteuermodus bei Kälte vorgesteuert wird, in welchem die zu kontrollierende Größe der Druck des Gases im Gehäuse ist, und:
i) optional der Aktuator so gesteuert wird, dass das katalytische System in der offenen Position angeordnet wird, vorzugsweise während einer Dauer zwischen 1 Sekunde und 10 Sekunden, danach
ii) der Aktuator so gesteuert wird, dass das katalytische System in der geschlossenen Position angeordnet und gehalten wird, solange der Druck des Gases im Gehäuse kleiner als ein maximaler Solldruck ist, welcher vorzugsweise größer oder gleich dem maximalen Regeldruck ist,
iii) der Aktuator so gesteuert wird, dass das katalytische System in der offenen Position angeordnet und gehalten wird, und das Gehäuse geöffnet wird, so dass das erzeugte Gas aus dem Gehäuse entweicht, und
- falls im Verlaufe von Schritt iii) der gemessene Gasdruck kleiner und danach größer als ein minimaler Solldruck wird, welcher vorzugsweise kleiner oder gleich dem minimalen Regeldruck ist, aufgehört wird, das Verfahren gemäß dem Vorsteuermodus bei Kälte vorzusteuern, und das Verfahren vorzugsweise gemäß dem Regelmodus vorgesteuert wird,
- andernfalls die Schritte i) und ii) durchgeführt werden.

14. Verfahren nach dem vorhergehenden Anspruch, wobei die minimale Kontrolltemperatur der Flüssigkeit und/oder die minimale Kontrolltemperatur der Umgebung und/oder die minimale Kontrolltemperatur des Katalysators gleich 5 °C oder sogar gleich 0 °C sind.

15. Einrichtung (350) zur Produktion von elektrischer Energie, wobei die Einrichtung aufweist:
- eine Brennstoffzelle (355), die dafür ausgelegt ist, einen elektrischen Strom durch Oxidation eines Gases zu erzeugen, und
- eine Vorrichtung (5) zur Erzeugung von Gas nach einem der Ansprüche 1 bis 9, die mit der Brennstoffzelle in Fluidverbindung steht und dafür ausgelegt ist, die Brennstoffzelle mit diesem Gas zu versorgen.

## Claims

1. Apparatus (5) of use for generating a gas, the apparatus comprising:
- an enclosure (10) defining an internal space (15) for containing a liquid (80) capable of generating the gas by coming into contact with a catalyst (105);
- a catalytic system (20) comprising first (205) and second (210) parts that together define a catalysis chamber (100) for containing the catalyst,
the first and second parts being movable relative to each other, preferably in translation and/or in rotation, between a closed position, in which the catalysis chamber is isolated from the internal space, and an open position, in which the catalysis chamber is in fluid communication with the internal space,
so that, when the liquid and the catalyst are respectively contained in the internal space and in the catalysis chamber, in the open position, the liquid enters the catalysis chamber and the gas is generated by bringing the liquid into contact with the catalyst;
- an actuator connected to the catalytic system and configured to place the catalytic system in the open position and/or in the closed position; and
- a command unit for commanding the actuator.

2. Apparatus according to Claim 1, wherein the actuator is a hydraulic ram or an electric ram or a pneumatic ram or an electric motor.

3. Apparatus according to Claim 2, wherein, in at least one of the open and closed positions of the catalytic system, at least one part of the ram is disposed in the housing and/or the catalytic system is disposed in the internal space of the enclosure.

4. Apparatus according to either of Claims 2 and 3, wherein the ram is hydraulic or preferably pneumatic, the apparatus comprising a command valve (35) connected to the command unit and to the ram, the command valve being configured to receive a command signal originating from the command unit and to deliver an amount of pressurized fluid to the ram and/or to purge the ram of said fluid, following the reception of said command signal,
the apparatus preferably comprising a pressurized fluid supply component (40) in fluid communication with the command valve, preferably selected from a cartridge (155) comprising the pressurized pneumatic fluid, the cartridge preferably being detachably connected to the command valve, and an assembly formed by a tank (190) comprising the pneumatic fluid connected to a compressor (195) or to a pump for compressing the fluid.

5. Apparatus according to any one of the preceding claims, wherein the command unit is configured to command the actuator according to at least one control mode configured by means of at least one control parameter, the control mode preferably being a regulation mode configured by means of control parameters comprising first and second regulation parameters, and the command unit being configured to receive a quantity to be regulated, preferably the pressure of the gas, and to command the actuator so as to place the catalytic system in a first position and a second position, for example, in an open position and a closed position, respectively, when the quantity to be regulated is less than the first regulation parameter, preferably than a minimum regulation pressure, and is respectively greater than the second regulation parameter, preferably than a maximum regulation pressure.

6. Apparatus according to Claim 5, comprising a control unit configured to:
- receive at least one quantity to be controlled;
- analyse the quantity to be controlled, in particular by comparing the quantity to be controlled with at least one control parameter; and depending on the result of the analysis:
- generate a control signal according to the regulation mode or to a specific control mode different from the regulation mode; and
- send the control signal to the command unit that is configured to receive said control signal and to command the actuator according to the control mode corresponding to the control signal.

7. Apparatus according to any one of the preceding claims, comprising a unit for measuring a quantity selected from the gas pressure in the internal space, the pressure of the gas in a machine, preferably a fuel cell, with which the apparatus is in fluid communication, the generated gas flow rate and a temperature, for example the temperature of the liquid or the temperature of the catalyst or the temperature of the environment of the apparatus, the measurement unit being configured to send the measured quantity to the command unit and/or to the control unit,
preferably, depending on the control mode that is to be implemented by the command unit, the quantity measured by the measurement unit is a quantity to be regulated and/or a quantity to be controlled.

8. Apparatus according to any one of the preceding claims, comprising the catalyst, with at least a portion of the catalyst being fixed to the first part and/or to the second part, and/or the internal space contains the liquid.

9. Apparatus according to any one of the preceding claims, wherein a wall (250; 270) of the first part, respectively of the second part, comprises at least one window (275; 280) passing through the thickness of said wall, the window of the first part, respectively of the second part, being completely sealed by the second part, respectively by the first part, in the closed position of the catalytic system, and the windows of the first and second parts define an access path for the liquid through the walls of the first and second parts toward the catalysis chamber in the open position of the catalytic system.

10. Method for generating a gas, preferably dihydrogen, wherein an apparatus (5) according to any one of the preceding claims is provided, the internal space (15) of the enclosure (10) containing a liquid (80), preferably an aqueous hydride solution, capable of generating the gas through contact with a catalyst (105), and the catalysis chamber (100) of the catalytic system containing said catalyst, which is preferably selected from platinum, cobalt, ruthenium, nickel and the alloys thereof, the method being implemented according to a control mode, called regulation mode, configured by means of first and second regulation parameters, the method comprising steps involving measuring a quantity to be regulated and commanding the actuator to place the catalytic system in first and second positions, preferably in open and closed positions, respectively, when the quantity to be regulated is less than, respectively greater than, the first regulation parameter and, respectively, the second regulation parameter.

11. Method according to the preceding claim, wherein the quantity to be regulated is selected from the gas pressure in the internal space, the pressure of the gas in a machine with which the apparatus, preferably a fuel cell, is in fluid communication, the generated gas flow rate and a temperature, for example the temperature of the liquid or the temperature of the catalyst or the temperature of the environment of the apparatus, and the first and second regulation parameters are respectively minimum and maximum values of the quantity to be regulated,
the quantity to be regulated preferably being the gas pressure in the internal space, and the first and second regulation parameters respectively being minimum and maximum regulation pressures.

12. Method according to one of Claims 10 and 11, wherein:
- at least one quantity, preferably several quantities, to be controlled is/are measured;
- the quantity to be controlled is analysed, in particular by comparing it with at least one control parameter; and
depending on the result of the analysis,
- the method ceases to be controlled according to the regulation mode, then the method is controlled according to a specific control mode different from the regulation mode.

13. Method according to the preceding claim, wherein:
- the quantities to be controlled are the temperature of the liquid and/or the temperature of the environment of the apparatus and/or the temperature of the catalyst, and the control parameters respectively are a minimum control temperature of the liquid and/or a minimum control temperature of the environment and/or a minimum control temperature of the catalyst;
- an analysis is started that involves verifying whether, during an analysis duration, which is preferably between 0.1 and 10 seconds, the temperature of the liquid and/or the temperature of the environment of the apparatus and/or the temperature of the catalyst are respectively less than the minimum control temperature of the liquid and/or a minimum control temperature of the environment and/or the minimum control temperature of the catalyst and, if this is the case,
- the method ceases to be controlled according to the regulation mode, then the method is controlled according to a cold control mode, in which the quantity to be controlled is the pressure of the gas in the enclosure, and:
i) optionally, the actuator is commanded so as to place the catalytic system in the open position, preferably for a duration of between 1 second and 10 seconds; then
ii) the actuator is commanded so as to place and hold the catalytic system in the closed position as long as the pressure of the gas in the enclosure is less than a maximum setpoint pressure, which preferably is greater than or equal to the maximum regulation pressure;
iii) the actuator is commanded so as to place and hold the catalytic system in the open position and the enclosure is opened so that the generated gas is discharged from the enclosure; and
- if, during step iii) the measured gas pressure becomes less than, then greater than a minimum setpoint pressure, which is preferably less than or equal to the minimum regulation pressure, the method ceases to be controlled according to the cold control mode and, preferably, the method is controlled according to the regulation mode;
- otherwise steps i) and ii) are performed.

14. Method according to the preceding claim, wherein the minimum control temperature of the liquid and/or the minimum control temperature of the environment and/or the minimum control temperature of the catalyst are equal to 5°C, even equal to 0°C.

15. Electric energy production device (350), the device comprising:
- a fuel cell (355) configured to generate an electric current through oxidation of a gas; and
- a gas generation apparatus (5) according to any one of Claims 1 to 9, in fluid communication with the fuel cell and configured to supply the fuel cell with said gas.
